(19) Europäisches Patentamt
European Patent Office
Office européen des brevets

(11) **EP 4 510 657 A1**

(12) **EUROPEAN PATENT APPLICATION**
published in accordance with Art. 153(4) EPC

(43) Date of publication:
**19.02.2025  Bulletin 2025/08**

(21) Application number: **23787825.1**

(22) Date of filing: **14.04.2023**

(51) International Patent Classification (IPC):
*H04W 8/14* (2009.01)

(52) Cooperative Patent Classification (CPC):
**H04W 8/14**

(86) International application number:
**PCT/CN2023/088355**

(87) International publication number:
**WO 2023/198183 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022  CN 202210399444
21.04.2022  CN 202210427549
07.11.2022  CN 202211387676
14.02.2023  CN 202310112752**

(71) Applicant: **Vivo Mobile Communication Co., Ltd.
Dongguan, Guangdong 523863 (CN)**

(72) Inventors:
• **WANG, Chenxi
  Dongguan, Guangdong 523863 (CN)**
• **SUN, Peng
  Dongguan, Guangdong 523863 (CN)**
• **TAMRAKAR, Rakesh
  Dongguan, Guangdong 523863 (CN)**

(74) Representative: **Cabinet Beaumont
4, Place Robert Schuman
B.P. 1529
38025 Grenoble Cedex 1 (FR)**

(54) **INFORMATION ACQUISITION METHOD AND APPARATUS, INFORMATION SENDING METHOD AND APPARATUS, TERMINAL, AND NETWORK SIDE DEVICE**

(57)    This application discloses an information obtaining method and apparatus, an information sending method and apparatus, a terminal, and a network-side device, pertaining to the field of communication technologies. The information obtaining method in embodiments of this application includes: receiving, by a terminal, target signaling sent by a network-side device; and obtaining, by the terminal, a timing advance TA value of the terminal for a first object according to the target signaling; where the target signaling is signaling obtained before the terminal accesses the first object.

A terminal receives target signaling sent by a network-side device — 201

The terminal obtains a timing advance TA value of the terminal for a first object according to the target signaling; where the target signaling is signaling obtained before the terminal accesses the first object — 202

FIG. 2

## Description

## CROSS-REFERENCE TO RELATED APPLICATIONS

This application claims priority to Chinese Patent Application No. 202310112752.6, filed in China on February 14, 2023, which is incorporated herein by reference in its entirety. This application further claims priority to Chinese Patent Application No. 202211387676.1, filed in China on November 7, 2022; this application further claims priority to Chinese Patent Application No. 202210427549.3, filed in China on April 21, 2022; and this application further claims priority to Chinese Patent Application No. 202210399444.1, filed in China on April 15, 2022.

## TECHNICAL FIELD

This application pertains to the field of communication technologies, and specifically, relates to an information obtaining method and apparatus, an information sending method and apparatus, a terminal, and a network-side device.

## BACKGROUND

Timing advance (Timing Advance, TA) is used for uplink transmission by a terminal, aiming to ensure that an uplink data packet of the terminal arrives at a base station within an expected time. At present, in a cell handover scenario, the terminal usually sends a preamble to a target cell after successfully receiving a higher-layer command indicating cell handover and completing downlink synchronization and automatic gain control (Automatic Gain Control, AGC) adjustment, and then the target cell reports a TA value to the terminal, so that the terminal obtains the TA value. The terminal may interrupt data transmission with a source cell after receiving higher-layer signaling indicating cell handover; however, a processing time of the higher-layer signaling is relatively long and downlink synchronization also takes some time, and therefore such manner results in a relatively long interruption time between the terminal and a current serving cell.

## SUMMARY

Embodiments of this application provide an information obtaining method and apparatus, an information sending method and apparatus, a terminal, and a network-side device, which can resolve the problem of a relatively long interruption time for a TA value obtaining manner in the related art.

According to a first aspect, an information obtaining method is provided, including:

  receiving, by a terminal, target signaling sent by a network-side device; and

obtaining, by the terminal, a timing advance TA value of the terminal for a first object according to the target signaling; where

the target signaling is signaling obtained before the terminal accesses the first object.

According to a second aspect, an information sending method is provided, including:
sending, by a network-side device, target signaling to a terminal, where the target signaling is used by the terminal to obtain a timing advance TA value for a first object, and the target signaling is signaling sent by the network-side device before the terminal accesses the first object.

According to a third aspect, an information obtaining apparatus is provided, where the apparatus includes:

  a first receiving module, configured to receive target signaling sent by a network-side device; and
  an obtaining module, configured to obtain a timing advance TA value of a terminal for a first object according to the target signaling; where
  the target signaling is signaling obtained before the terminal accesses the first object.

According to a fourth aspect, an information sending apparatus is provided, where the apparatus includes:
a sending module, configured to send target signaling to a terminal, where the target signaling is used by the terminal to obtain a timing advance TA value for a first object, and the target signaling is signaling sent by a network-side device before the terminal accesses the first object.

According to a fifth aspect, an information obtaining method is provided, including:

  receiving, by a terminal, target signaling sent by a network-side device; and
  obtaining, by the terminal, a timing advance TA value of the terminal for a first object according to the target signaling; where
  the target signaling includes at least one of the following:

    first signaling, where the first signaling is used for indicating configuration information of a plurality of objects and the plurality of objects include the first object; and
    second signaling, where the second signaling is used for obtaining a TA value of the first object.

According to a sixth aspect, an information sending method is provided, including:

  sending, by a network-side device, target signaling to a terminal, where the target signaling is used by the terminal to obtain a timing advance TA value for a first object; and

the target signaling includes at least one of the following:

first signaling, where the first signaling is used for indicating configuration information of a plurality of objects and the plurality of objects include the first object; and

second signaling, where the second signaling is used for obtaining a TA value of the first object.

According to a seventh aspect, an information obtaining apparatus is provided, including:

a first receiving module, configured to receive target signaling sent by a network-side device; and

an obtaining module, configured to obtain a timing advance TA value of a terminal for a first object according to the target signaling; where

the target signaling includes at least one of the following:

first signaling, where the first signaling is used for indicating configuration information of a plurality of objects and the plurality of objects include the first object; and

second signaling, where the second signaling is used for obtaining a TA value of the first object.

According to an eighth aspect, an information sending apparatus is provided, including:

a sending module, configured to send target signaling to a terminal, where the target signaling is used by the terminal to obtain a timing advance TA value for a first object; and

the target signaling includes at least one of the following:

first signaling, where the first signaling is used for indicating configuration information of a plurality of objects and the plurality of objects include the first object; and

second signaling, where the second signaling is used for obtaining a TA value of the first object.

According to a ninth aspect, a terminal is provided. The terminal includes a processor and a memory, where a program or instruction capable of running on the processor is stored in the memory, and when the program or instruction is executed by the processor, the steps of the method according to the first aspect are implemented, or the steps of the method according to the fifth aspect are implemented.

According to a tenth aspect, a terminal is provided, including a processor and a communication interface, where the processor or the communication interface is configured to receive target signaling sent by a network-side device, and obtain a timing advance TA value of a terminal for a first object according to the target signaling, where the target signaling is signaling obtained before the terminal accesses the first object.

According to an eleventh aspect, a terminal is provided, including a processor and a communication interface, where the processor or the communication interface is configured to receive target signaling sent by a network-side device, and obtain a timing advance TA value of a terminal for a first object according to the target signaling, where the target signaling includes at least one of the following: first signaling, where the first signaling is used for indicating configuration information of a plurality of objects and the plurality of objects include the first object; and second signaling, where the second signaling is used for obtaining a TA value of the first object.

According to a twelfth aspect, a network-side device is provided. The network-side device includes a processor and a memory, where a program or instruction capable of running on the processor is stored in the memory, and when the program or instruction is executed by the processor, the steps of the method according to the second aspect are implemented, or the steps of the method according to the sixth aspect are implemented.

According to a thirteenth aspect, a network-side device is provided, including a processor and a communication interface, where the communication interface is configured to send target signaling to a terminal, where the target signaling is used for the terminal to obtain a timing advance TA value for a first object, and the target signaling includes at least one of the following: first signaling, where the first signaling is used for indicating configuration information of a plurality of objects and the plurality of objects include the first object; and second signaling, where the second signaling is used for obtaining a TA value of the first object.

According to a fourteenth aspect, a network-side device is provided, including a processor and a communication interface, where the communication interface is configured to send target signaling to a terminal, where the target signaling is used for the terminal to obtain a timing advance TA value for a first object, and the target signaling includes at least one of the following: first signaling, where the first signaling is used for indicating configuration information of a plurality of objects and the plurality of objects include the first object; and second signaling, where the second signaling is used for obtaining a TA value of the first object.

According to a fifteenth aspect, an information transmission system is provided, including a terminal and a network-side device. The terminal may be configured to perform the steps of the information obtaining method according to the first aspect, and the network-side device may be configured to perform the steps of the information sending method according to the second aspect; or the terminal may be configured to perform the steps of the information obtaining method according to the fifth aspect, and the network-side device may be configured to perform the steps of the information sending method according to the sixth aspect.

According to a sixteenth aspect, a readable storage medium is provided, where a program or instruction is stored in the readable storage medium; and when the program or instruction is executed by a processor, the steps of the method according to the first aspect are implemented, or the steps of the method according to the second aspect are implemented, or the steps of the method according to the fifth aspect are implemented, or the steps of the method according to the sixth aspect are implemented.

According to a seventeenth aspect, a chip is provided, where the chip includes a processor and a communication interface, the communication interface is coupled to the processor, and the processor is configured to run a program or instruction to implement the method according to the first aspect, or implement the method according to the second aspect, or implement the method according to the fifth aspect, or implement the method according to the sixth aspect.

According to an eighteenth aspect, a computer program/program product is provided, where the computer program/program product is stored in a storage medium, and the computer program/program product is executed by at least one processor to implement the steps of the information obtaining method according to the first aspect, or the steps of the information sending method according to the second aspect, or the steps of the information obtaining method according to the fifth aspect, or the steps of the information sending method according to the sixth aspect.

In an embodiment of one aspect of this application, a terminal receives target signaling sent by a network-side device; and the terminal obtains a TA value of the terminal for a first object according to the target signaling; where the target signaling is signaling obtained before the terminal accesses the first object. The terminal can obtain the TA value for the first object before accessing the first object, which can reduce a data interruption time caused by cell handover. In addition, this can also reduce a delay of cell handover performed by the terminal and ensure the stability of data transmission.

In an embodiment of another aspect of this application, a terminal receives target signaling sent by a network-side device; and the terminal obtains a timing advance TA value of the terminal for a first object according to the target signaling; where the target signaling includes at least one of the following: first signaling, used for indicating configuration information of a plurality of objects and the plurality of objects include the first object; and second signaling, used for obtaining a TA value of the first object. The object is a plurality of TRPs in a current serving cell of the terminal, and the configuration information of the plurality of objects is the same, or the configuration information of the plurality of objects is different. In the above, the terminal can obtain the TA value of the first object through the target signaling sent by the network-side device, so that the terminal can obtain and maintain TA values of a plurality of TRPs. Compared with a conventional method that one TA value corresponds to one cell, that is, all TRPs in the cell use one TA value, maintaining the TAs of the plurality of TRPs reduces the TA granularity, improves accuracy and correctness of uplink synchronization, and greatly improves reliability and effectiveness of multi-TRP transmission.

## BRIEF DESCRIPTION OF DRAWINGS

FIG. 1 is a block diagram of a wireless communication system according to an embodiment of this application;

FIG. 2 is a flowchart of an information obtaining method according to an embodiment of this application;

FIG. 3 is a structural diagram of an information obtaining apparatus according to an embodiment of this application;

FIG. 4 is a flowchart of an information sending method according to an embodiment of this application;

FIG. 5 is a structural diagram of an information sending apparatus according to an embodiment of this application;

FIG. 6 is a flowchart of another information obtaining method according to an embodiment of this application;

FIG. 7 is a structural diagram of another information obtaining apparatus according to an embodiment of this application;

FIG. 8 is a flowchart of another information sending method according to an embodiment of this application;

FIG. 9 is a structural diagram of another information sending apparatus according to an embodiment of this application;

FIG. 10 is a structural diagram of a communication device according to an embodiment of this application;

FIG. 11 is a schematic diagram of a hardware structure of a terminal according to an embodiment of this application;

FIG. 12 is a schematic diagram of a hardware structure of another terminal according to an embodiment of this application; and

FIG. 13 is a schematic diagram of a hardware structure of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

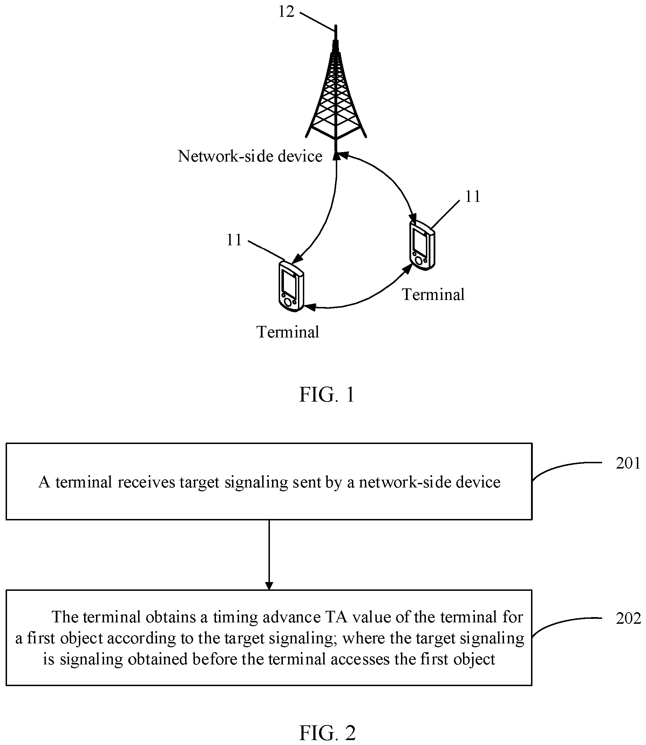

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

With reference to the accompanying drawings, the following describes in detail, by using some embodiments and application scenarios thereof, an information obtaining method, an information obtaining apparatus, an information sending method, an information sending apparatus, a terminal, and a network-side device provided in the embodiments of this application.

FIG. 2 is a flowchart of an information obtaining method according to an embodiment of this application. As shown in FIG. 2, the information obtaining method includes the following steps.

Step 201. A terminal receives target signaling sent by a network-side device.

Step 202: The terminal obtains a timing advance TA value of the terminal for a first object according to the target signaling; where the target signaling is signaling obtained before the terminal accesses the first object.

The target signaling is obtained before the terminal accesses the first object, which can be understood as that the terminal has obtained the target signaling before accessing the first object, and the terminal accessing the first object can be understood as that the terminal has handed over from a current serving object to the first object. The first object may be a cell group, a cell, or a transmission and reception point (Transmission and Reception Point, TRP).

In some embodiments, the target signaling includes at least one of the following:

first signaling, where the first signaling is used for indicating configuration information of a plurality of objects and the plurality of objects include the first object;

second signaling, where the second signaling is used for indicating information about the first object; and

third signaling, where the third signaling is used for obtaining a TA value of the first object.

Further, the first signaling, the second signaling, and the third signaling satisfy either of the following two cases:

the first signaling and the second signaling are different signaling, and the second signaling and the third signaling are same signaling; and

the first signaling, the second signaling, and the third signaling are different signaling.

The first signaling is explained below:

The first signaling may be radio resource control (Radio Resource Control, RRC) signaling. The first signaling may include configuration information of a plurality of objects, and the configuration information of the plurality of objects may include at least one of the following:

configuration information of a second object, where the second object is an object currently providing a service to the terminal, that is, a current serving object, such as a serving cell;

configuration information of at least one candidate object, where the at least one candidate object includes the first object;

a reference timing difference between each candidate object and the second object;

uplink synchronization indication information of each candidate object; and

downlink synchronization indication information of each candidate object.

The configuration information of the at least one candidate object may include all of configuration information of each candidate object configured in a unit of one candidate object; or part of configuration information of each candidate object configured in a unit of one candidate object. In the latter case, remaining configuration information of each candidate object may be the same as the configuration information of the second object. The configuration information of the candidate object may include at least one of higher-layer configuration information and physical-layer related configuration information. The higher-layer configuration information includes at least one of cell group configuration information CellGroupConfig, primary cell configuration information SpCellConfig, reconfiguration information with synchronization Reconfiguration WithSync, serving cell common configuration information ServingCellConfigCommon, and serving cell configuration information ServingCellConfig. The physical-layer related configuration information may include at least one of transmission configuration indicator (Transmission Configuration Indicator, TCI), Quasi co-location (Quasi co-location, QCL), path loss reference signal (Path Loss Reference Signal, PL RS), random access channel (Random Access Channel, RACH) resource, scrambling code information, frequency domain information (such as synchronization signal/physical broadcast channel signal block (or a synchronization signal block) (Synchronization Signal and PBCH block, SSB) frequency, CSI reference signal ((Channel State Information, CSI)-Reference Signal, CSI-RS) frequency, and frequency band indication), subcarrier spacing (subcarrier spacing, SCS) and channel sounding reference signal (Sounding Reference Signal, SRS).

The reference timing difference between each candidate object and the second object can be configured as follows: first, the reference timing difference is configured and a parameter value is not zero or greater than a first threshold, and such configuration may indicate that the candidate object is not synchronized with the second object; secondly, the reference timing difference is defaulted, or the reference timing difference is configured and a parameter value is zero or less than a first threshold, and such configuration may indicate that the candidate object is synchronized with the second object. Here, the first threshold can be configured by the network-side device or determined according to a protocol or a terminal capability. Accuracy of the reference timing difference between the candidate object and the second object may be at least one of frame, slot, orthogonal frequency division multiplex (Orthogonal frequency division multiplex, OFDM) symbol, second, millisecond, microsecond and nanosecond. The reference timing difference between the candidate object and the second object can be configured in the configuration information of the candidate object.

The uplink synchronization indication information of each candidate object may indicate a timing advance group (Timing Advance Group, TAG) identifier corresponding to the candidate object, or indicate whether the candidate object and the first object belong to different TAGs. The uplink synchronization indication information of each candidate object may be 1-bit indication information, where 0 indicates uplink synchronization and 1 indicates non-uplink synchronization, or the uplink synchronization indication information of each candidate object is Bool type information, where true indicates uplink synchronization and false indicates non-uplink synchronization; or in a case that the uplink synchronization indication information is configured, it means non-uplink synchronization, and if this parameter is defaulted, it can be considered as uplink synchronization by default. The uplink synchronization indication information of the candidate object can be configured in the configuration information of the candidate object.

The second signaling is described as follows:

The second signaling may include one of medium access control control element (Medium Access Control Control Element, MAC CE) and downlink control information (Downlink Control Information, DCI), where DCI may include at least one of downlink DCI (DL DCI) and uplink DCI (UL DCI). Indicating the first object by the second signaling includes at least the following two manners: first, the second signaling includes a target field, where the target field is used to indicate the first object, that is, one field for indicating the first object is present in the second signaling; secondly, the second signaling includes beam indication information, where the beam indication information is associated with the first object, that is, the beam indication information carried in the second signaling is associated with the first object, and the beam indication information may include a transmission configuration indicator (Transmission Configuration Indicator, TCI) state (that is, TCI state), joint TCI (Joint TCI), DL TCI, UL TCI, spatial relation (Spatial relation), or the like. The terminal may determine, according to the second signaling, the first object from the candidate objects included in the first signaling, and an identification indication of the first object is the same as or different from an identification indication of the second object.

For the case that the second signaling and the third signaling are the same signaling, the above related description of the second signaling is applicable to the third signaling. In this case, the terminal may obtain the TA value of the terminal for the first object based on a RACH resource associated with a quasi co-location source reference signal (Reference Signal, RS) corresponding to the beam indication information carried in the second signaling.

For the case that the second signaling and the third signaling are the same signaling, the second signaling may also carry a TA value. In this way, the terminal may determine the TA value carried in the second signaling as the TA value of the terminal for the first object.

For the case that the second signaling and the third signaling are different signaling, the third signaling is described as follows:

the third signaling is used for activating at least one RACH resource of at least one object, and the activated RACH resource is used for obtaining the TA value of the at least one object.

The third signaling may include at least one of the following:

first indication information, where the first indication information is used for indicating one or more preamble indexes (Preamble index);

second indication information, where the second indication information is used for indicating one or more reference signal RS indexes;

third indication information, where the third indication information is used for indicating a preamble mask index (Preamble Mask index);

fourth indication information, where the fourth indication information is used for indicating an identifier of the at least one object;

fifth indication information, where the fifth indication information is used for indicating a configuration information index of the at least one object; and

sixth indication information, where the sixth indication information is used for indicating frequency domain indication information of the at least one object;
where

the at least one object includes the first object.

As an example, the RACH resource that can be activated by the third signaling may be for contention-based random access (Contention Based Random Access, CBRA) or contention-free random access (Contention Free Random Access, CFRA). When the preamble index is 0, it may indicate that the RACH resource activated by the third signaling is for CBRA, and when the preamble index is not 0, it may indicate that the RACH resource activated by the third signaling is for CFRA.

In this embodiment of this application, for the related scheme that the terminal obtains the TA value of the terminal for the first object according to the target signaling, the terminal may obtain the TA value of the terminal for the first object according to the first signaling and the second signaling, or the terminal may obtain the TA value of the terminal for the first object according to the second signaling, or the terminal may obtain the TA value of the terminal for the first object according to the third signaling, or the terminal may obtain the TA value of the terminal for the first object in a manner of sending an SRS according to the target signaling by the terminal and sending a TA value by the network-side device, or the terminal obtains the TA value of the terminal for the first object in a manner of sending a preamble according to the target signaling by the terminal and sending a TA value by the network-side device. The following separately describes the optional embodiments:

In an implementation, the obtaining, by the terminal, a TA value of the terminal for a first object according to the target signaling includes:

determining, by the terminal, a reference timing difference between the first object and a second object and a downlink reception time difference between the first object and the second object according to the first signaling and the second signaling; and
determining, by the terminal, the TA value of the terminal for the first object based on a TA value of the second object, the reference timing difference between the first object and the second object, and the downlink reception time difference between the first object and the second object.

This implementation is specifically applicable to a case in which the first object and the second object are not synchronized. In this case, the reference timing difference and the downlink reception time difference are present between the first object and the second object, and the terminal may determine the TA value of the terminal for the first object based on three parameters: the TA value of the second object, the reference timing difference between the first object and the second object, and the downlink reception time difference between the first object and the second object.

It should be noted that the second object is a current serving object, and therefore, the TA value of the second object has been obtained by the terminal in advance.

As mentioned above, the first signaling is used to indicate the configuration information of the plurality of objects. For example, the reference timing difference between the first object and the second object and/or the downlink reception time difference between the first object and the second object may be included in the configuration information of the plurality of objects indicated by the first signaling.

In this implementation, the terminal determines the TA value of the terminal for the first object according to the first signaling and the second signaling.

In another implementation, the obtaining, by the terminal, a TA value of the terminal for a first object according to the target signaling includes:
obtaining, by the terminal, the TA value of the terminal for the first object according to the first signaling and the second signaling, where the TA value of the terminal for the first object is the same as a TA value of the terminal for a second object.

Here, the TA of the second object may be notified to the terminal by the network-side device through a legacy random access response (Random Access Response, RAR) or MAC CE. As an example, the uplink synchronization indication information and downlink synchronization indication information included in the first signaling are used to indicate whether the TA value of each candidate cell is the same as the TA value of the second object, and the second signaling is used for determining the first object, so the terminal may determine, according to the first signaling and the second signaling, whether the TA value of the first object is the same as the TA value of the second object. This implementation is specifically applicable to a case where the TA value of the first object is the same as the TA value of the second object, that is, a case where the first object and the second object are synchronized. In this case, the TA value of the terminal for the first object is the same as the TA value of the terminal for the second object, and the terminal may use the TA value for the second object as the TA value for the first object.

In this implementation, the terminal determines the TA value of the terminal for the first object according to the first signaling and the second signaling.

In still another implementation, the second signaling carries a TA value; and the obtaining, by the terminal, a TA value of the terminal for a first object according to the target signaling includes:
determining, by the terminal, the TA value carried in the second signaling as the TA value of the terminal for the first object.

In yet another implementation, the obtaining, by the terminal, a TA value of the terminal for a first object according to the target signaling includes:
determining, by the terminal, the TA value of the first object based on the TA value carried in the third signaling.

In this implementation, the third signaling may also carry at least an identifier of the first object.

In another implementation, the target signaling includes the first signaling, and the obtaining, by the terminal, a timing advance TA value of the terminal for a first object according to the target signaling includes:

sending, by the terminal, an SRS to the network-side device according to the target signaling, where the SRS is used for obtaining a TA value of the terminal for at least one object; and
receiving, by the terminal, second signaling to obtain the timing advance TA value of the terminal for the first object, where the second signaling carries target information of the terminal for the at least one object, and the target information includes a TA value, or the target information includes a TA value and an object identifier corresponding to the TA value, or the target information includes a TA group identifier and a TA value; where the TA group identifier is used for indicating a first TA group, the first TA group is associated with the at least one object, and the TA value is a TA value of the terminal for the at least one object associated with the first TA group; where an association relationship between the first TA group and the at least one object is explicitly or implicitly configured by a network, and the at least one object includes the first object. The terminal may obtain the TA value of the terminal for the first object from the information carried by the second signaling. Specifically, the TA group identifier may be indicated by O bits, where the value of O is $\lfloor \log_2 K \rfloor$, and K is the maximum number of TA groups that the terminal can maintain under the first object or the maximum number of TA groups that the terminal can maintain under the at least one object.

In this implementation, the SRS may be determined by the terminal according to the configuration information in the first signaling, or in a case that the target signaling further includes the third signaling, the SRS is activated by the third signaling.

Optionally, beam indication information of the SRS is associated with an identifier of the at least one object, and the SRS is sent based on timing information of a second object, where the second object is an object currently providing a service to the terminal. Here, the beam indication information of the SRS being associated with the identifier of the at least one object can be understood as a spatial relation of SRS being associated with the identifier of the at least one object. As an example, the beam indication information of the SRS is associated with the identifier of the first object.

It should be noted that in this implementation, a time of sending the SRS by the terminal is after reception of the first signaling or the third signaling, and a time of receiving the second signaling by the terminal is after sending of the SRS. In this case, the second signaling is not included in the target signaling.

**In** yet another implementation, after the terminal receives the target signaling sent by the network-side device, the method further includes:

determining, by the terminal, a first RACH resource for uplink synchronization of at least one object according to the first signaling and the third signaling; sending, by the terminal, a preamble (preamble) on the first RACH resource; and receiving, by the terminal, a TA value of the terminal for the at least one object sent by the network-side device, where the 1st symbol of the third signaling is earlier than the 1st symbol of the second signaling, and the at least one object includes the first object.

Optionally, the determining, by the terminal, a first RACH resource for uplink synchronization of at least one object according to the first signaling and the third signaling includes:

in a case that a second object is determined to be in downlink synchronization with the at least one object according to the configuration information of the plurality of objects, determining, by the terminal, the first RACH resource for uplink synchronization of the at least one object based on timing information of the second object, where the second object is an object currently providing a service to the terminal; or after a reference timing difference between the second object and the at least one object is determined according to the configuration information of the plurality of objects, determining, by the terminal, the first RACH resource for uplink synchronization of the at least one object based on the timing information of the second object and the reference timing difference.

Optionally, in a case that the terminal sends the preamble on the first RACH resource, a behavior of the terminal satisfies one of the following:

a measurement or scheduling behavior of the terminal on a second object is not limited, where the second object is an object currently providing a service to the terminal; on a time domain resource of the first RACH resource, the terminal send no uplink signal to the second object; on a time domain resource of a first target resource, the terminal send no uplink signal to the second object, where a difference between the 1st symbol of the first target resource and the 1st symbol of the first RACH resource is X1 symbols, and a difference between the last symbol of the first target resource and the last symbol of the first RACH resource is Y1 symbols, where both X1 and Y1 are positive integers; in a case that an uplink signal of the second object meets a preset condition, the terminal send no uplink signal to the second object; the terminal refrains from monitoring a first target downlink signal, where the first target downlink signal is transmitted on a RACH resource for uplink synchronization of the second object, and the first target downlink signal is a downlink signal of the second object; the terminal refrains from monitoring a second target downlink signal, where the second target downlink signal is transmitted on a time domain resource corresponding to the RACH resource for uplink synchronization of the second object, and the second target downlink signal is a downlink signal of the second object; and the terminal refrains from monitoring a second target downlink signal transmitted on a time domain resource of a second target resource, where a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, where X2 and Y2 are positive integers.

Here, a value of X1 may be specified by the protocol or configured by the network-side device, a value of Y1 may be specified by the protocol or configured by the network-side device, a value of X2 may be specified by the protocol or configured by the network-side device, and a value of Y2 may be specified by the protocol or configured by the network-side device.

Optionally, the preset condition includes at least one of the following:

an interval between the 1st symbol of the uplink signal of the second object and the last symbol corresponding to the first RACH resource is less than a first threshold; and

an interval between the last symbol of the uplink signal of the second object and the 1st symbol corresponding to the first RACH resource is less than a second threshold.

Here, the first threshold may be specified by the protocol or configured by the network-side device, the second threshold may be specified by the protocol or configured by the network-side device, and the first threshold may be equal to the second threshold.

Optionally, the receiving, by the terminal, a TA value of the terminal for the at least one object sent by the network-side device includes:

monitoring, by the terminal, a RAR on a second object to obtain target information of the terminal for the at least one object, or monitoring, by the terminal, a RAR on the at least one object to obtain the target information of the terminal for the at least one object, where the target information includes a TA value, or the target information includes a TA value and an object identifier corresponding to the TA value, or the target information includes a TA group identifier and a TA value, where the TA group identifier is used to indicate a first TA group, the first TA group is associated with the at least one object, and the TA value is a TA value of the terminal for the at least one object associated with the first TA group. An association relationship between the first TA group and the at least one object is explicitly or implicitly configured by a network. Specifically, the TA group identifier may be indicated by O bits, where the value of O is $\lfloor \log_2 K \rfloor$, and K is the maximum number of TA groups that the terminal can maintain under the first object or the maximum number of TA groups that the terminal can maintain under the at least one object. In a case that the UE can maintain two TAs in one cell, if a TA group identifier in the RAR is 0, it means that the current RAR carries a TA with a corresponding TAG id=0; or if the TA group identifier in RAR is 1, it means that the current RAR carries a TA with a corresponding TAG id=1. If the RAR is Msg B corresponding to CFRA triggered by a PDCCH Order, and the object identifier is indicated in the PDCCH Order, the terminal does not need to decode the TA identifier group information.

Here, the object identifier may be indicated by a control resource set (Control resource set, CORESET) pool index (Poolindex), a physical cell identifier (Physical Cell Identifier, PCI), a candidate cell index or a group ID (group ID), or the like.

Optionally, in a case that the terminal monitors the RAR on the at least one object, a behavior of the terminal satisfies one of the following:

a measurement or scheduling behavior of the terminal on a second object is not limited, where the second object is an object currently providing a service to the terminal;

on a resource for monitoring a RAR by the terminal, the terminal refrains from monitoring a downlink signal of the second object, and/or on the resource for monitoring a RAR by the terminal, the terminal send no uplink signal to the second object; and

on a time domain resource of a third target resource, the terminal refrains from monitoring a downlink signal of the second object, and/or on the time domain resource of the third target resource, the terminal send no uplink signal to the second object, where a difference between the 1st symbol of the third target resource and the 1st symbol of the resource for monitoring the RAR by the terminal is X3 symbols, and a difference between the last symbol of the third target resource and the last symbol of the resource for monitoring the RAR by the terminal is Y3 symbols; where X3 and Y3 are positive integers.

Here, the downlink signal may include at least one of physical downlink control channel (Physical downlink control channel, PDCCH), physical downlink shared channel (Physical downlink shared channel, PDSCH), CSI-RS, and SSB. The uplink signal may include at least one of physical uplink control channel (Physical Uplink Control Channel, PUCCH), physical uplink shared channel (Physical Uplink Shared Channel, PUSCH), and SRS. The unit of the time domain resource may be symbol or slot. The value of X3 may be specified by the protocol or configured by the network-side device, and the value of Y3 may be specified by the protocol or configured by the network-side device.

To sum up, in this embodiment of this application, the terminal can obtain the TA value for the first object before accessing the first object, which can reduce a data interruption time caused by cell handover. In addition, this can also reduce a delay of cell handover performed by the terminal and ensure the stability of data transmission. Especially for asynchronous scenarios, the delay of the terminal can be greatly reduced and the mobility management efficiency can be improved.

In some embodiments, in a case that the terminal receives a RAR carrying target information for the at least one object, the terminal starts or restarts a first timer associated with the target information.

In some embodiments, the first timer is a timer associated with the first TA group, and configuration information of timers associated with different first TA groups is the same or different. The configuration information of the timers associated with different first TA groups being the same or different can be understood as that at least two pieces of configuration information of the timers associated with different first TA groups are the same or different. In some embodiments, the configuration information of the timers associated with different first TA groups may be different.

In some embodiments, after the terminal receives a RAR carrying target information for the at least one object and the terminal receives at least one piece of fourth signaling, the terminal performs a first operation.

In some embodiments, the fourth signaling is MAC CE signaling used for updating a TA of the second object.

In some embodiments, the first operation includes at least one of the following:

the terminal updates a TA value of a first TA group to which a third object belongs, based on a TA adjustment value carried in the fourth signaling, a downlink reception time difference between the third object and the second object, and a downlink time difference between the third object and the second object; and

the terminal restarts a timer of the first TA group to which the third object belongs.

The downlink time difference between the third object and the second object may be obtained through calculation by two RACH procedures (procedure).

In some embodiments, the third object satisfies at least one of the following conditions:

the third object is at least one object in a third object group, where the third object group is an object list for which the terminal obtains or updates a TA by performing the first operation, the number of associated first TA groups for the third object group is configured or indicated by the network, and object information included in the third object group is configured by the network or determined by the terminal according to a first default rule; and

the third object is at least one object in a fourth object group, where the fourth object group is an object list for which a TA value is obtained through a RACH resource activated by the third signaling, and object information included in the fourth object group and the number of associated first TA groups for the fourth object group are configured or indicated by the network.

In some embodiments, the terminal expects that the number of associated first TA groups for the third object group is the same as the number of associated first TA groups for the fourth object group.

In some embodiments, in a case that the terminal expects that the number of associated first TA groups for the third obj ect group is less than the number of associated first TA groups for the fourth object group, the terminal determines the third object group from the fourth object group according to the first default rule.

The first default rule may be:

the terminal obtains TAs of N neighboring cells through the PDCCH order, and the N neighboring cells are associated with M TA groups; however, the terminal can merely maintain K (K is less than M) TA groups; and

top K TA groups are taken based on a sequence of first TA group identifiers (for example, in ascending order or in descending order) to update the TA through the first operation. In some embodiments, before the terminal receives the second signaling for indicating the information about the first object, in a case that a timer corresponding to a first TA group to which a fifth object belongs has expired, the terminal re-obtains a TA of the fifth object through a RACH procedure, where the fifth object is at least one object included in the fourth object group but not included in the third object group.

The RACH procedure may include CFRA and CBRA, or may include two manners: triggering through the PDCCH order by the network; and triggering by the UE.

In some embodiments, in a case that the terminal receives the second signaling for indicating the information about the first object, the method includes:

in a case that a first timer corresponding to a first TA group to which the first object belongs has expired, obtaining, by the terminal, a TA of the first object through a RACH procedure; and/or

in a case that the first timer corresponding to the first TA group to which the first object belongs has not expired, performing, by the terminal, uplink transmission based on the TA value of the first object.

The RACH process may include CFRA and CBRA, or may include two manners: triggering by the network; and triggering by the UE. In a case of triggering by the network, a CFRA resource of the first object may be indicated to the terminal by using the second signaling, and the indication information may include: preamble index, preamble mask index, RS index, and the like.

For the information obtaining method provided in the embodiments of this application, the execution subject may be an information obtaining apparatus. In the embodiments of this application, the information obtaining method being performed by the information obtaining apparatus is used as an example to describe the information obtaining apparatus provided in the embodiments of this application.

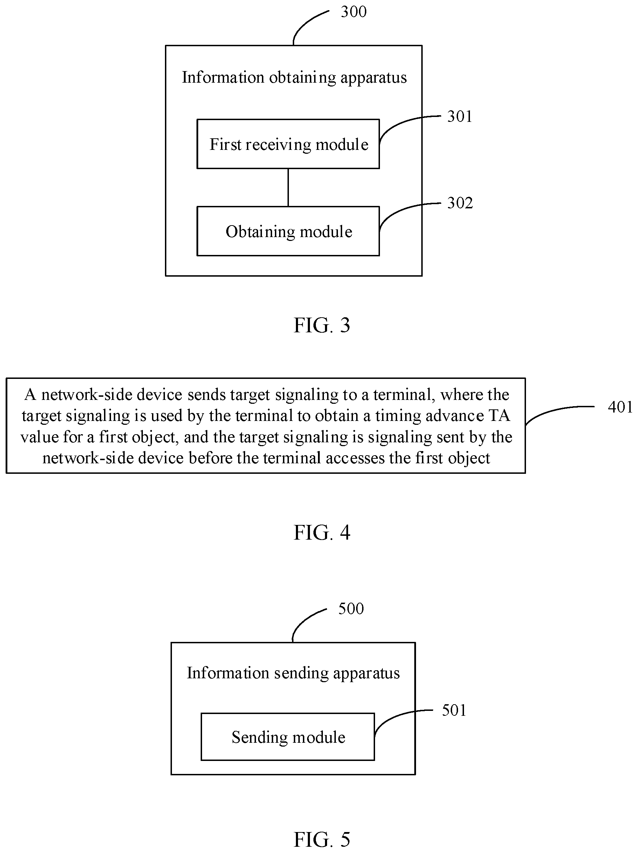

FIG. 3 is a structural diagram of an information obtaining apparatus according to an embodiment of this application. As shown in FIG. 3, the information obtaining apparatus 300 includes:

a first receiving module 301, configured to receive target signaling sent by a network-side device; and

an obtaining module 302, configured to obtain a timing advance TA value of a terminal for a first object according to the target signaling; where
the target signaling is signaling obtained before the terminal accesses the first object.

In some embodiments, the target signaling includes at least one of the following:

first signaling, where the first signaling is used for indicating configuration information of a plurality of objects and the plurality of objects include the first object;

second signaling, where the second signaling is used for indicating information about the first object; and

third signaling, where the third signaling is used for obtaining a TA value of the first object.

In some embodiments, the first signaling, the second signaling, and the third signaling satisfy:

the first signaling and the second signaling are different signaling, and the second signaling and the third signaling are same signaling;
or,
the first signaling, the second signaling, and the third signaling are different signaling.

In some embodiments, the second signaling includes a target field, and the target field is used for indicating the first object.

In some embodiments, the second signaling includes beam indication information, and the beam indication information is associated with the first object.

In some embodiments, the obtaining module 302 is specifically configured to:
in a case that the second signaling and the third signaling are same signaling, obtain the TA value of the terminal for the first object based on a RACH resource associated with a quasi co-location source RS corresponding to the beam indication information carried in the second signaling.

In some embodiments, the second signaling carries a TA value; and
the obtaining module 302 is specifically configured to:
determine the TA value carried in the second signaling as the TA value of the terminal for the first object.

In some embodiments, the third signaling is used for activating at least one RACH resource of at least one object, and the activated RACH resource is used for obtaining a TA value of the at least one object.

In some embodiments, the third signaling includes at least one of the following:

first indication information, where the first indication information is used for indicating one or more preamble indexes;

second indication information, where the second indication information is used for indicating one or more reference signal RS indexes;

third indication information, where the third indication information is used for indicating a preamble mask index;

fourth indication information, where the fourth indication information is used for indicating an identifier of the at least one object;

fifth indication information, where the fifth indication information is used for indicating a configuration information index of the at least one object; and

sixth indication information, where the sixth indication information is used for indicating frequency domain indication information of the at least one object;

where the at least one object includes the first object.

In some embodiments, the configuration information of the plurality of objects includes at least one of the following:

configuration information of a second object, where the second object is an object currently providing a service to the terminal;

configuration information of at least one candidate object, where the at least one candidate object includes the first object;

a reference timing difference between each candidate object and the second object;

uplink synchronization indication information of each candidate object; and

downlink synchronization indication information of each candidate object.

In some embodiments, the configuration information of the at least one candidate object includes:

all of configuration information of each candidate object configured in a unit of one candidate object;
or,
part of configuration information of each candidate object configured in a unit of one candidate object.

In some embodiments, the obtaining module 302 is specifically configured to:

determine a reference timing difference between the first object and a second object and a downlink reception time difference between the first object and the second object according to the first signaling and the second signaling; and

determine the TA value of the terminal for the first object based on a TA value of the second object, the reference timing difference between the first object and the second object, and the downlink reception time difference between the first object and the second object.

In some embodiments, the obtaining module 302 is specifically configured to:

obtain the TA value of the terminal for the first object according to the first signaling and the second signaling, where the TA value of the terminal for the first object is the same as a TA value of the terminal for a second object.

In some embodiments, the target signaling includes the first signaling, and the obtaining module 302 includes: a sending sub-module, configured to send a channel sounding reference signal SRS to the network-side device according to the target signaling, where the SRS is used for obtaining a TA value of the terminal for at least one object; and

a receiving sub-module, configured to receive second signaling, where the second signaling carries target information of the terminal for the at least one object, and the target information includes a TA value, or the target information includes a TA value and an object identifier corresponding to the TA value, or the target information includes a TA group identifier and a TA value; where the TA group identifier is used for indicating a first TA group, the first TA group is associated with the at least one object, and the TA value is a TA value of the terminal for the at least one object associated with the first TA group. An association relationship between the first TA group and the at least one object is explicitly or implicitly configured by a network, and the at least one object includes the first object. Specifically, the TA group identifier may be indicated by O bits, where the value of O is

$$\lfloor \log_2 K \rfloor$$

, and K is the maximum number of TA groups that the terminal can maintain under the first object or the maximum number of TA groups that the terminal can maintain under the at least one object.

In some embodiments, the SRS is determined according to the configuration information in the first signaling; or is activated by the third signaling.

In some embodiments, beam indication information of the SRS is associated with an identifier of the at least one object, and the SRS is sent based on timing information of a second object, where the second object is an object currently providing a service to the terminal.

In some embodiments, the information obtaining apparatus 300 further includes:

a determining module, configured to determine a first RACH resource for uplink synchronization of at least one object according to the first signaling and the third signaling;

a second sending module, configured to send a preamble on the first RACH resource; and

a second receiving module, configured to receive a TA value of the terminal for the at least one object sent by the network-side device, where the 1st symbol of the third signaling is earlier than the 1st symbol of the second signaling, and the at least one object includes the first object.

In some embodiments, the determining module is specifically configured to:

in a case that a second object is determined to be in downlink synchronization with the at least one object according to the configuration information of the plurality of objects, determine, for the terminal, the first RACH resource for uplink synchronization of the at least one object based on timing information of the second object, where the second object is an object currently providing a service to the terminal;
or,

after a reference timing difference between the second object and the at least one object is determined according to the configuration information of the plurality of objects, determine, for the terminal, the first RACH resource for uplink synchronization of the at least one object based on the timing information of the second object and the reference timing difference.

In some embodiments, in a case that the terminal sends the preamble on the first RACH resource, a behavior of the terminal satisfies one of the following:

a measurement or scheduling behavior of the terminal on a second object is not limited, where the second object is an object currently providing a service to the terminal;

on a time domain resource of the first RACH resource, the terminal send no uplink signal to the second object;

on a time domain resource of a first target resource, the terminal send no uplink signal to the second object, where a difference between the 1st symbol of the first target resource and the 1st symbol of the first RACH resource is X1 symbols, and a difference between the last symbol of the first target resource and the last symbol of the first RACH resource is Y1 symbols, where both X1 and Y1 are positive integers;

in a case that an uplink signal of the second object meets a preset condition, the terminal send no uplink signal to the second object;

the terminal refrains from monitoring a first target downlink signal, where the first target downlink signal is transmitted on a RACH resource for uplink synchronization of the second object, and the first target downlink signal is a downlink signal of the second object;

the terminal refrains from monitoring a second target downlink signal, where the second target downlink signal is transmitted on a time domain resource corresponding to the RACH resource for uplink synchronization of the second object, and the second target downlink signal is a downlink signal of the second object; and

the terminal refrains from monitoring a second target downlink signal transmitted on a time domain resource of a second target resource, where a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, where X2 and Y2 are positive integers.

In some embodiments, the preset condition includes at least one of the following:

an interval between the 1st symbol of the uplink signal of the second object and the last symbol corresponding to the first RACH resource is less than a first threshold; and
an interval between the last symbol of the uplink signal of the second object and the 1st symbol corresponding to the first RACH resource is less than a second threshold.

In some embodiments, the second receiving module is specifically configured to:
monitor a RAR on a second object to obtain target information of the terminal for the at least one object, or monitor a RAR on the at least one object to obtain the target information of the terminal for the at least one object, where the target information includes a TA value, or the target information includes a TA value and an object identifier corresponding to the TA value, or the target information includes a TA group identifier and a TA value, where the TA group identifier is used to indicate a first TA group, the first TA group is associated with the at least one object, and the TA value is a TA value of the terminal for the at least one object associated with the first TA group. An association relationship between the first TA group and the at least one object is explicitly or implicitly configured by a network, and the at least one object includes the first object. Specifically, the TA group identifier may be indicated by O bits, where the value of O is $\lfloor \log_2 K \rfloor$, and K is the maximum number of TA groups that the terminal can maintain under the first object or the maximum number of TA groups that the terminal can maintain under the at least one object. In a case that the UE can maintain two TAs in one cell, if a TA group identifier in the RAR is 0, it means that the current RAR carries a TA with a corresponding TAG id=0; or if the TA group identifier in RAR is 1, it means that the current RAR carries a TA with a corresponding TAG id=1. If the RAR is Msg B corresponding to CFRA triggered by a PDCCH Order, and the object identifier is indicated in the PDCCH Order, the terminal does not need to decode the TA identifier group information.

In some embodiments, in a case that the terminal monitors the RAR on the at least one object, a behavior of the terminal satisfies one of the following:

a measurement or scheduling behavior of the terminal on a second object is not limited, where the second object is an object currently providing a service to the terminal;
on a resource for monitoring a RAR by the terminal, the terminal refrains from monitoring a downlink signal of the second object, and/or on the resource for monitoring a RAR by the terminal, the terminal send no uplink signal to the second object; and
on a time domain resource of a third target resource, the terminal refrains from monitoring a downlink signal of the second object, and/or on the time domain resource of the third target resource, the terminal send no uplink signal to the second object, where a difference between the 1st symbol of the third target resource and the 1st symbol of the resource for monitoring the RAR by the terminal is X3 symbols, and a difference between the last symbol of the third target resource and the last symbol of the resource for monitoring the RAR by the terminal is Y3 symbols; where X3 and Y3 are positive integers.

In some embodiments, the terminal further includes a first processing module, where the first processing module is configured to: in a case that a RAR carrying target information for the at least one object is received, start or restart a first timer associated with the target information.

In some embodiments, the first timer is a timer associated with the first TA group, and configuration information of timers associated with different first TA groups is the same or different.

In some embodiments, the first processing module is configured to: perform a first operation in a case that a RAR carrying target information for the at least one object is received, and at least one piece of fourth signaling is received.

In some embodiments, the fourth signaling is MAC CE signaling used for updating a TA of the second object.

In some embodiments, the first operation includes at least one of the following:

updating a TA value of a first TA group to which a third object belongs, based on a TA adjustment value carried in the fourth signaling, a downlink reception time difference between the third object and the second object, and a downlink time difference between the third object and the second object; and
restarting a timer of the first TA group to which the third object belongs.

In some embodiments, the third object satisfies at least one of the following conditions:

the third object is at least one object in a third object group, where the third object group is an object list for which the terminal obtains or updates a TA by performing the first operation, the number of associated first TA groups for the third object group is configured or indicated by the network, and object information included in the third object group is configured by the network or determined by the terminal according to a first default rule; and

the third object is at least one object in a fourth object group, where the fourth object group is an object list for which a TA value is obtained through a RACH resource activated by the third signaling, and object information included in the fourth object group and the number of associated first TA groups for the fourth object group are configured or indicated by the network.

In some embodiments, the terminal expects that the number of associated first TA groups for the third object group is the same as the number of associated first TA groups for the fourth object group.

In some embodiments, the first processing module is configured to: in a case that the terminal expects that the number of associated first TA groups for the third object group is less than the number of associated first TA groups for the fourth object group, determine the third object group from the fourth object group according to the first default rule.

In some embodiments, the first processing module is configured to: before the second signaling for indicating the information about the first object is received, in a case that a timer corresponding to a first TA group to which a fifth object belongs has expired, re-obtain a TA of the fifth object through a RACH procedure, where the fifth object is at least one object included in the fourth object group but not included in the third object group.

In some embodiments, in a case that the second signaling for indicating the information about the first object is received, the first processing module is configured to:

in a case that a first timer corresponding to a first TA group to which the first object belongs has expired, obtain a TA of the first object through a RACH procedure; and/or

in a case that the first timer corresponding to the first TA group to which the first object belongs has not expired, perform uplink transmission based on the TA value of the first object.

To sum up, in this embodiment of this application, the terminal can obtain the TA value for the first object before accessing the first object, which can reduce a data interruption time caused by cell handover. In addition, this can also reduce a delay of cell handover performed by the terminal and ensure the stability of data transmission. Especially for asynchronous scenarios, the delay of the terminal can be greatly reduced and the mobility management efficiency can be improved.

The information obtaining apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The information obtaining apparatus provided in this embodiment of this application is capable of implementing the processes implemented in the method embodiments in FIG. 2, with the same technical effects achieved. To avoid repetition, details are not described herein again.

FIG. 4 is a flowchart of another information sending method according to an embodiment of this application. As shown in FIG. 4, the information sending method includes the following steps.

Step 401: A network-side device sends target signaling to a terminal, where the target signaling is used by the terminal to obtain a timing advance TA value for a first object, and the target signaling is signaling sent by the network-side device before the terminal accesses the first object.

In some embodiments, the target signaling includes at least one of the following:

first signaling, where the first signaling is used for indicating configuration information of a plurality of objects and the plurality of objects include the first object;
second signaling, where the second signaling is used for indicating information about the first object; and
third signaling, where the third signaling is used for obtaining a TA value of the first object.

In some embodiments, the first signaling, the second signaling, and the third signaling satisfy:

the first signaling and the second signaling are different signaling, and the second signaling and the third signaling are same signaling;
or,
the first signaling, the second signaling, and the third signaling are different signaling.

In some embodiments, the second signaling includes a target field, and the target field is used for indicating the first object.

In some embodiments, the second signaling includes beam indication information, and the beam indication information is associated with the first object.

In some embodiments, in a case that the second signaling and the third signaling are same signaling, a RACH resource associated with a quasi co-location source RS corresponding to the beam indication information carried in the second signaling is used by the terminal to obtain the TA value for the first object.

In some embodiments, the second signaling carries a TA value; and the TA value carried in the second signaling is used by the terminal to determine the TA value under the first object.

In some embodiments, the third signaling is used for activating at least one RACH resource of at least one object, and the activated RACH resource is used for obtaining a TA value of the at least one object.

In some embodiments, the third signaling includes at least one of the following:

first indication information, where the first indication information is used for indicating one or more preamble indexes;

second indication information, where the second indication information is used for indicating one or more reference signal RS indexes;

third indication information, where the third indication information is used for indicating a preamble mask index;

fourth indication information, where the fourth indication information is used for indicating an identifier of the at least one object;

fifth indication information, where the fifth indication information is used for indicating a configuration information index of the at least one object; and

sixth indication information, where the sixth indication information is used for indicating frequency domain indication information of the at least one object; where

the at least one object includes the first object.

In some embodiments, the configuration information of the plurality of objects includes at least one of the following:

configuration information of a second object, where the second object is an object currently providing a service to the terminal;

configuration information of at least one candidate object, where the at least one candidate object includes the first object;

a reference timing difference between each candidate object and the second object;

uplink synchronization indication information of each candidate object; and

downlink synchronization indication information of each candidate object.

In some embodiments, the configuration information of the at least one candidate object includes:

all of configuration information of each candidate object configured in a unit of one candidate object;

or,

part of configuration information of each candidate object configured in a unit of one candidate object.

In this embodiment of this application, the target signaling is sent to the terminal before the terminal accesses the first object, so that the terminal can obtain the TA value for the first object before accessing the first object, thus reducing a data interruption time caused by cell handover. In addition, this can also reduce a delay of cell handover performed by the terminal and ensure the stability of data transmission. Especially for asynchronous scenarios, the delay of the terminal can be greatly reduced and the mobility management efficiency can be improved.

For the information sending method provided in the embodiments of this application, the execution subject may be an information sending apparatus. In the embodiments of this application, the information sending method being performed by the information sending apparatus is used as an example to describe the information sending apparatus provided in the embodiments of this application.

FIG. 5 is a structural diagram of an information sending apparatus according to an embodiment of this application. As shown in FIG. 5, the information sending apparatus 500 includes:

a sending module 501, configured to send target signaling to a terminal, where the target signaling is used by the terminal to obtain a timing advance TA value for a first object, and the target signaling is signaling sent by a network-side device before the terminal accesses the first object.

In some embodiments, the target signaling includes at least one of the following:

first signaling, where the first signaling is used for indicating configuration information of a plurality of objects and the plurality of objects include the first object;

second signaling, where the second signaling is used for indicating information about the first object; and

third signaling, where the third signaling is used for obtaining a TA value of the first object.

In some embodiments, the first signaling, the second signaling, and the third signaling satisfy:

the first signaling and the second signaling are different signaling, and the second signaling and the third signaling are same signaling;

or,

the first signaling, the second signaling, and the third signaling are different signaling.

In some embodiments, the second signaling includes a target field, and the target field is used for indicating the first object.

In some embodiments, the second signaling includes beam indication information, and the beam indication information is associated with the first object.

In some embodiments, in a case that the second signaling and the third signaling are same signaling, a RACH resource associated with a quasi co-location source RS corresponding to the beam indication information carried in the second signaling is used by the terminal to obtain the TA value for the first object.

In some embodiments, the second signaling carries a TA value; and the TA value carried in the second signaling is used by the terminal to determine the TA value under the first object.

In some embodiments, the third signaling is used for activating at least one RACH resource of at least one object, and the activated RACH resource is used for obtaining a TA value of the at least one object.

In some embodiments, the third signaling includes at least one of the following:

first indication information, where the first indication information is used for indicating one or more preamble indexes;

second indication information, where the second indication information is used for indicating one or more reference signal RS indexes;

third indication information, where the third indication information is used for indicating a preamble mask index;

fourth indication information, where the fourth indication information is used for indicating an identifier of the at least one object;

fifth indication information, where the fifth indication information is used for indicating a configuration information index of the at least one object; and

sixth indication information, where the sixth indication information is used for indicating frequency domain indication information of the at least one object; where

the at least one object includes the first object.

In some embodiments, the configuration information of the plurality of objects includes at least one of the following:

configuration information of a second object, where the second object is an object currently providing a service to the terminal;

configuration information of at least one candidate object, where the at least one candidate object includes the first object;

a reference timing difference between each candidate object and the second object;

uplink synchronization indication information of each candidate object; and

downlink synchronization indication information of each candidate object.

In some embodiments, the configuration information of the at least one candidate object includes:

all of configuration information of each candidate object configured in a unit of one candidate object; or,

part of configuration information of each candidate object configured in a unit of one candidate object.

In this embodiment of this application, the target signaling is sent to the terminal before the terminal accesses the first object, so that the terminal can obtain the TA value for the first object before accessing the first object, thus reducing a data interruption time caused by cell handover. In addition, this can also reduce a delay of cell handover performed by the terminal and ensure the stability of data transmission. Especially for asynchronous scenarios, the delay of the terminal can be greatly reduced and the mobility management efficiency can be improved.

The information sending apparatus in this embodiment of this application may be an electronic device, such as an electronic device with an operating system, or a component in the electronic device, such as an integrated circuit or a chip. The electronic device may be a network-side device or other devices than the network-side device. For example, the network-side device may include, but is not limited to, the types of the network-side device 12 listed above, which is not specifically limited in this embodiment of this application.

The information sending apparatus provided in this embodiment of this application is capable of implementing the processes implemented in the method embodiments in FIG. 4, with the same technical effects achieved. To avoid repetition, details are not described herein again.

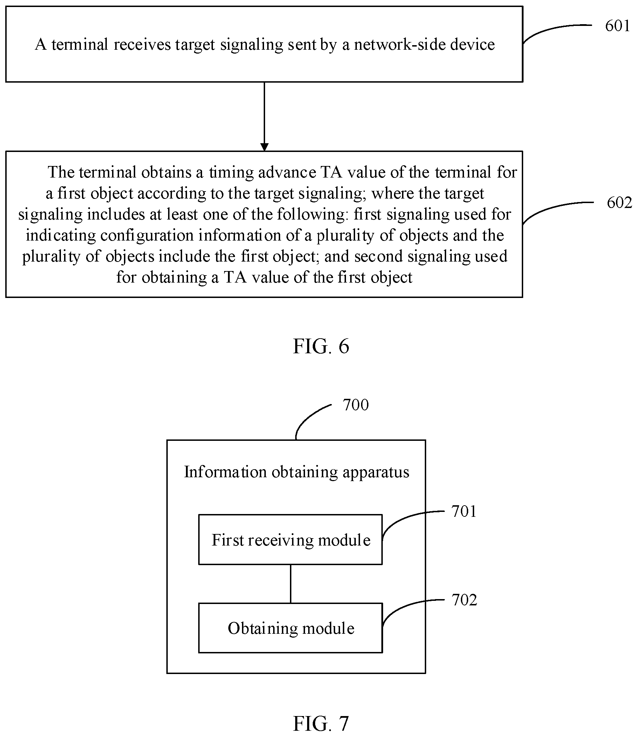

FIG. 6 is a flowchart of another information obtaining method according to an embodiment of this application. As shown in FIG. 6, the information obtaining method includes the following steps.

Step 601: A terminal receives target signaling sent by a network-side device.

Step 602: The terminal obtains a timing advance TA value of the terminal for a first object according to the target signaling; where the target signaling includes at least one of the following: first signaling, where the first signaling is used for indicating configuration information of a plurality of objects and the plurality of objects include the first object; and second signaling, where the second signaling is used for obtaining a TA value of the first object.

This embodiment of this application includes two scenarios. One scenario is that the terminal has not accessed or does not access the first object, but may transmit data with the first object. In this case, the first object may be a TRP of a neighboring cell of the current serving cell. The other scenario is that a plurality of TRPs are configured in the current serving cell, and all of the TRPs may provide a data transmission service to the terminal, where the first object is one of the TRPs.

In this embodiment of this application, the terminal can obtain the TA value of the first object through the target signaling sent by the network-side device, so that the terminal can obtain and maintain TA values of a plurality of TRPs. Compared with a conventional method that one TA value corresponds to one cell, that is, all TRPs in the cell use one TA value, maintaining the TAs of the plurality of TRPs reduces the TA granularity, improves accuracy and correctness of uplink synchronization, and greatly improves reliability and effectiveness of multi-TRP transmission.

In some embodiments, the second signaling includes a target field and a TA value, where the target field is used for indicating the first object, and the TA value is the TA value of the terminal for the first object.

In some embodiments, the second signaling includes a TA group identifier and a TA value, where the TA group identifier is used for indicating a first TA group, the first TA group is associated with the first object, and the TA value is a TA value of the terminal for an object associated with the first TA group. An association relationship between the first TA group and the first object is explicitly or implicitly configured by a network. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex.

In some embodiments, the second signaling is used for activating at least one RACH resource of the first object, and the activated RACH resource is used for obtaining the TA value of the first object.

In some embodiments, a channel used for carrying the second signaling is associated with the first object, and the association relationship includes at least one of the following: an object identifier associated with beam indication information corresponding to the channel carrying the second signaling is the same as an identifier of the first object; an object identifier corresponding to a resource group identifier that is corresponding to the channel carrying the second signaling is the same as the identifier of the first object; and an object identifier associated with activated beam indication information that is associated with the resource group identifier corresponding to the channel carrying the second signaling is the same as the identifier of the first object. A correspondence between the resource group identifier corresponding to the channel carrying the second signaling and the object identifier is explicitly or implicitly configured by RRC. In this case, the first object may be determined by the object identifier associated with the beam indication information corresponding to the channel carrying the second signaling, or by the object identifier corresponding to a resource group identifier that is corresponding to the channel carrying the second signaling, or by the object identifier associated with activated beam indication information that is associated with the resource group identifier corresponding to the channel carrying the second signaling.

In some embodiments, the second signaling includes at least one of the following:

first indication information, where the first indication information is used for indicating one or more preamble indexes;
second indication information, where the second indication information is used for indicating one or more reference signal RS indexes;
third indication information, where the third indication information is used for indicating a preamble mask index; and
fourth indication information, where the fourth indication information is used for indicating an identifier of the first object.

Specifically, the second signaling is a PDCCH order, and the second indication information indicates SSB index. In addition to being indicated by the object identifier carried in the fourth indication information, a PCI corresponding to an SSB index, that is, an object identifier, may be determined in one of the following manners: a) being determined based on a PCI identifier configured in a TCI state of a PDCCH carrying a PDCCH order; b) being determined based on a PCI identifier carried in an activated TCI state associated with CORESETPoolIndex corresponding to CORESET for monitoring the PDCCH order; and c) being determined by detecting a PCI identifier associated with CORESETPoolIndex corresponding to CORESET for monitoring the PDCCH order, where an association relationship between CORESETPoolIndex and the PCI identifier is explicitly or implicitly configured by the network.

In some embodiments, an RS corresponding to the one or more RS indexes is associated with the first object.

In some embodiments, the configuration information of the plurality of objects includes at least one of the following:

configuration information of a second object, where the second object and the first object have different object identifiers;
configuration information of at least one candidate object, where the at least one candidate object includes the first object;
a reference timing difference between each candidate object and the second object;
uplink synchronization indication information of each candidate object; and
downlink synchronization indication information of each candidate object.

In some embodiments, the configuration information of the at least one candidate object includes at least one of RS resource, RACH resource, control channel resource, and data channel resource.

In some embodiments, the obtaining, by the terminal, a TA value of the terminal for a first object according to the target signaling includes:

determining, by the terminal, a reference timing difference between the first object and a second object and a downlink reception time difference between the first object and the second object according to the first signaling and the second signaling; and
obtaining, by the terminal, the TA value of the terminal for the first object based on a TA value of the second object, the reference timing difference between the first object and the second object, and the downlink reception time difference between the first object and the second object.

In some embodiments, the obtaining, by the terminal, a TA value of the terminal for a first object according to the target signaling includes:
obtaining, by the terminal, the TA value of the terminal for the first object according to the first signaling and the second signaling, where the TA value of the terminal for the first object is the same as a TA value of the terminal for a second object.

In some embodiments, the target signaling includes the first signaling, and the obtaining, by the terminal, a timing advance TA value of the terminal for a first object according to the target signaling includes:

sending, by the terminal, a channel sounding reference signal SRS to the network-side device according to the target signaling, where the SRS is used for obtaining a TA value of the terminal for at least one object; and
receiving, by the terminal, third signaling, where the third signaling carries target information of the terminal for the at least one object, and the target information includes a TA value, or the target information includes a TA value and an object identifier corresponding to the TA value, or the target information includes a TA group identifier and a TA value; where the TA group identifier is used for indicating a first TA group, the first TA group is associated with the at least one object, and the TA value is a TA value of the terminal for the at least one object associated with the first TA group; where The at least one object includes the first object, and an association relationship between the first TA group and the at least one object is explicitly or implicitly configured by a network. Specifically, the TA group identifier may be indicated by O bits, where the value of O is

$$\lfloor \log_2 K \rfloor$$

, and K is the maximum number of TA groups that the terminal can maintain under the first object or the maximum number of TA groups that the terminal can maintain under the at least one object.

In some embodiments, the SRS is determined according to the configuration information in the first signaling or is activated by the second signaling received by the terminal, and the 1st symbol of the second signaling is earlier than the 1st symbol of the third signaling.

In some embodiments, beam indication information of the SRS is associated with an identifier of the at least one object, and the SRS is sent based on timing information of a second object.

In some embodiments, after the terminal receives the target signaling sent by the network-side device, the method further includes:

determining, by the terminal, a first RACH resource for uplink synchronization of at least one object according to the first signaling or according to the first signaling and the second signaling;
sending, by the terminal, a preamble on the first RACH resource; and
receiving, by the terminal, a TA value of the terminal for the at least one object sent by the network-side device, where the at least one object includes the first object.

In some embodiments, the terminal determines the first RACH resource for uplink synchronization of the at least one object according to the configuration information of the plurality of objects indicated in the first signaling. Specifically, SSB resources are divided into a plurality of groups in the configuration information, each group corresponding to one object. When the terminal determines that the first object is in uplink out-of-synchronization or downlink out-of-synchronization, the preamble information is sent on a RACH resource corresponding to a nearest SSB associated with the first object.

In some embodiments, the determining, by the terminal, a first RACH resource for uplink synchronization of at least one object according to the first signaling or according to the first signaling and the second signaling includes:

in a case that a second object is determined to be in downlink synchronization with the at least one object according to the configuration information of the plurality of objects, determining, by the terminal, the first RACH resource for uplink synchronization of the at least one object based on timing information of the second object;
or,
after a reference timing difference between the second object and the at least one object is determined according to the configuration information of the plurality of objects, determining, by the terminal, the first RACH resource for uplink synchronization of the at least one object based on the timing information of the second object and the reference timing difference.

In some embodiments, in a case that the terminal sends the preamble on the first RACH resource, a behavior of the terminal satisfies one of the following:

a measurement or scheduling behavior of the terminal on a second object is not limited, where the second object is an object currently providing a service to the terminal;
on a time domain resource of the first RACH resource, the terminal send no uplink signal to the second object;
on a time domain resource of a first target resource, the terminal send no uplink signal to the second object, where a difference between the 1st symbol of the first target resource and the 1st symbol of the first RACH resource is X1 symbols, and a difference between the last symbol of the first target resource and the last symbol of the first RACH resource is Y1 symbols, where both X1 and Y1 are positive integers;
in a case that an uplink signal of the second object meets a preset condition, the terminal send no uplink signal to the second object;
the terminal refrains from monitoring a first target downlink signal, where the first target downlink signal is transmitted on a RACH resource for uplink synchronization of the second object, and the first target downlink signal is a downlink signal of the second object;
the terminal refrains from monitoring a second target downlink signal, where the second target downlink signal is transmitted on a time domain resource corresponding to the RACH resource for uplink synchronization of the second object, and the second target downlink signal is a downlink signal of the second object; and
the terminal refrains from monitoring a second target downlink signal transmitted on a time domain resource of a second target resource, where a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, where X2 and Y2 are positive integers.

In some embodiments, the preset condition includes at least one of the following:

an interval between the 1st symbol of the uplink signal of the second object and the last symbol corresponding to the first RACH resource is less than a first threshold; and
an interval between the last symbol of the uplink signal of the second object and the 1st symbol corresponding to the first RACH resource is less than a second threshold.

In some embodiments, the receiving, by the terminal, a TA value of the terminal for the at least one object sent by the network-side device includes:
monitoring, by the terminal, a RAR on a second object to obtain target information of the terminal for the at least one object, or monitoring, by the terminal, a RAR on the at least one object to obtain the target information of the terminal for the at least one object, where the target information includes a TA value, or the target information includes a TA value and an object identifier corresponding to the TA value, or the target information includes a TA group identifier and a TA value, where the TA group identifier is used to indicate a first TA group, the first TA group is associated with the at least one object, and the TA value is a TA value of the terminal for the at least one object associated with the first TA group. An association relationship between the first TA group and the at least one object is explicitly or implicitly configured by a network. Specifically, the TA group identifier may be

$$\lfloor \log_2 K \rfloor$$

indicated by O bits, where the value of O is , and K is the maximum number of TA groups that the terminal can maintain under the first object or the maximum number of TA groups that the terminal can maintain under the at least one object. In a case that the UE can maintain two TAs in one cell, if a TA group identifier in the RAR is 0, it means that the current RAR carries a TA with a corresponding TAG id=0; or if the TA group identifier in RAR is 1, it means that the current RAR carries a TA with a corresponding TAG id=1. If the RAR is Msg B corresponding to CFRA triggered by a PDCCH Order, and the object identifier is indicated in the PDCCH Order, the terminal does not need to decode the TA identifier group information.

In some embodiments, in a case that the terminal monitors the RAR on the at least one object, a behavior of the terminal satisfies one of the following:

a measurement or scheduling behavior of the terminal on a second object is not limited, where the second object is an object currently providing a service to the terminal;
on a resource for monitoring a RAR by the terminal, the terminal refrains from monitoring a downlink signal of the second object, and/or on the resource for monitoring a RAR by the terminal, the terminal send no uplink signal to the second object; and
on a time domain resource of a third target resource, the terminal refrains from monitoring a downlink signal of the second object, and/or on the time domain resource of the third target resource, the terminal send no uplink signal to the second object, where a difference between the 1st symbol of the third target resource and the 1st symbol of the resource for monitoring the RAR by the terminal is X3 symbols, and a difference between the last symbol of the third target resource and the last symbol of the resource for monitoring the RAR by the terminal is Y3 symbols; where X3 and Y3 are positive integers.

In this embodiment of this application, the terminal can obtain the TA value of the first object through the target signaling sent by the network-side device, so that the terminal can obtain and maintain TA values of a plurality of TRPs. Compared with a conventional method that one TA value corresponds to one cell, that is, all TRPs in the cell use one TA value, maintaining the TA values of the plurality of TRPs reduces the TA granularity, improves accuracy and correctness of uplink synchronization, and greatly improves reliability and effectiveness of multi-TRP transmission.

For the information obtaining method provided in the embodiments of this application, the execution subject may be an information obtaining apparatus. In the embodiments of this application, the information obtaining method being performed by the information obtaining apparatus is used as an example to describe the information obtaining apparatus provided in the embodiments of this application.

FIG. 7 is a structural diagram of another information obtaining apparatus according to an embodiment of this application. As shown in FIG. 7, the information obtaining apparatus 700 includes:

a first receiving module 701, configured to receive target signaling sent by a network-side device; and
an obtaining module 702, configured to obtain a timing advance TA value of a terminal for a first object according to the target signaling; where
the target signaling includes at least one of the following:

first signaling, where the first signaling is used for indicating configuration information of a plurality of objects and the plurality of objects include the first object; and
second signaling, where the second signaling is used for obtaining a TA value of the first object.

In some embodiments, the second signaling includes a target field and a TA value, where the target field is used for indicating the first object, and the TA value is the TA value of the terminal for the first object.

In some embodiments, the second signaling includes a TA group identifier and a TA value, where the TA group identifier is used for indicating a first TA group, the first TA group is associated with the first object, and the TA value is a TA value of the terminal for an object associated with the first TA group. An association relationship between the first TA group and the first object is explicitly or implicitly configured by a network. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex.

In some embodiments, the second signaling is used for activating at least one RACH resource of the first object, and the activated RACH resource is used for obtaining the TA value of the first object.

In some embodiments, a channel used for carrying the second signaling is associated with the first object. Specifically, the association relationship includes at least one of the following: an object identifier associated with beam indication information corresponding to the channel carrying the second signaling is the same as an identifier of the first object; an object identifier corresponding to a resource group identifier that is corresponding to the channel carrying the second signaling is the same as the identifier of the first object; and an object identifier associated with activated beam indication information that is associated with the resource group identifier corresponding to the channel carrying the second signaling is the same as the identifier of the first object. A correspondence between the resource group identifier corresponding to the channel carrying the second signaling and the identifier of the object is explicitly configured by RRC. In this case, the first object may be determined by the object identifier associated with the beam indication information corresponding to the channel carrying the second signaling, or by the object identifier corresponding to a resource group identifier that is corresponding to the channel carrying the second signaling, or by the object identifier associated with activated beam indication information that is associated with the resource group identifier corresponding to the channel carrying the second signaling.

In some embodiments, the second signaling includes at least one of the following:

first indication information, where the first indication information is used for indicating one or more preamble indexes;
second indication information, where the second indication information is used for indicating one or more reference signal RS indexes;
third indication information, where the third indication information is used for indicating a preamble mask index; and
fourth indication information, where the fourth indication information is used for indicating an identifier of the first object.

In some embodiments, an RS corresponding to the one or more RS indexes is associated with the first object.

In some embodiments, the configuration information of the plurality of objects includes at least one of the following:

configuration information of a second object, where the second object and the first object have different object identifiers;

configuration information of at least one candidate object, where the at least one candidate object includes the first object;

a reference timing difference between each candidate object and the second object;

uplink synchronization indication information of each candidate object; and

downlink synchronization indication information of each candidate object.

In some embodiments, the configuration information of the at least one candidate object includes at least one of RS resource, RACH resource, control channel resource, and data channel resource.

In some embodiments, the obtaining module 702 is specifically configured to:

determine a reference timing difference between the first object and a second object and a downlink reception time difference between the first object and the second object according to the first signaling and the second signaling; and

obtain the TA value of the terminal for the first object based on a TA value of the second object, the reference timing difference between the first object and the second object, and the downlink reception time difference between the first object and the second object.

In some embodiments, the obtaining module 702 is specifically configured to:
obtain the TA value of the terminal for the first object according to the first signaling and the second signaling, where the TA value of the terminal for the first object is the same as a TA value of the terminal for a second object.

In some embodiments, the target signaling includes the first signaling, the obtaining module 702 includes:

a first sending module, configured to send a channel sounding reference signal SRS to the network-side device, where the SRS is used for obtaining a TA value of the terminal for at least one object; and

a first receiving module, configured to receive second signaling, where the second signaling carries target information of the terminal for the at least one object, and the target information includes a TA value, or the target information includes a TA value and an object identifier corresponding to the TA value, or the target information includes a TA group identifier and a TA value; where the TA group identifier is used for indicating a first TA group, the first TA group is associated with the at least one object, and the TA value is a TA value of the terminal for the at least one object associated with the first TA group; where an association relationship between the first TA group and the at least one object is explicitly or implicitly configured by a network, and the at least one object includes the first object. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex. Specifically, the TA group identifier may be indicated by O bits, where the value of O is $\lfloor \log_2 K \rfloor$, and K is the maximum number of TA groups that the terminal can maintain under the first object or the maximum number of TA groups that the terminal can maintain under the at least one object.

In some embodiments, the SRS is determined according to the configuration information in the first signaling or is activated by the third signaling received by the terminal, and the 1st symbol of the third signaling is earlier than the 1st symbol of the second signaling.

In some embodiments, beam indication information of the SRS is associated with an identifier of the at least one object, and the SRS is sent based on timing information of a second object.

In some embodiments, the information obtaining apparatus 700 further includes:

a determining module, configured to determine a first RACH resource for uplink synchronization of at least one object according to the first signaling or according to the first signaling and the second signaling;

a second sending module, configured to send a preamble on the first RACH resource; and

a second receiving module, configured to receive a TA value of the terminal for the at least one object sent by the network-side device, where the at least one object includes the first object.

In some embodiments, the determining module is specifically configured to:

in a case that a second object is determined to be in downlink synchronization with the at least one object according to the configuration information of the plurality of objects, determine, for the terminal, the first RACH resource for uplink synchronization of the at least one object based on timing information of the second object;

or,

after a reference timing difference between the second object and the at least one object is determined according to the configuration information of the plurality of objects, determine, for the terminal, the first RACH resource for uplink synchronization of the at least one object based on the timing information of the second object and the reference timing difference.

In some embodiments, in a case that the terminal sends the preamble on the first RACH resource, a behavior of the terminal satisfies one of the following:

a measurement or scheduling behavior of the terminal on a second object is not limited, where the second object is an object currently providing a service to the terminal;

on a time domain resource of the first RACH resource, the terminal send no uplink signal to the second object;

on a time domain resource of a first target resource, the terminal send no uplink signal to the second object, where a difference between the 1st symbol of the first target resource and the 1st symbol of the first RACH resource is X1 symbols, and a difference between the last symbol of the first target resource and the last symbol of the first RACH resource is Y1 symbols, where both X1 and Y1 are positive integers;

in a case that an uplink signal of the second object meets a preset condition, the terminal send no uplink signal to the second object;

the terminal refrains from monitoring a first target downlink signal, where the first target downlink signal is transmitted on a RACH resource for uplink synchronization of the second object, and the first target downlink signal is a downlink signal of the second object;

the terminal refrains from monitoring a second target downlink signal, where the second target downlink signal is transmitted on a time domain resource corresponding to the RACH resource for uplink synchronization of the second object, and the second target downlink signal is a downlink signal of the second object; and

the terminal refrains from monitoring a second target downlink signal transmitted on a time domain resource of a second target resource, where a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, where X2 and Y2 are positive integers.

In some embodiments, the preset condition includes at least one of the following:

an interval between the 1st symbol of the uplink signal of the second object and the last symbol corresponding to the first RACH resource is less than a first threshold; and

an interval between the last symbol of the uplink signal of the second object and the 1st symbol corresponding to the first RACH resource is less than a second threshold.

In some embodiments, the second receiving module is specifically configured to:

monitor a RAR on a second object to obtain target information of the terminal for the at least one object, or monitor a RAR on the at least one object to obtain the target information of the terminal for the at least one object, where the target information includes a TA value, or the target information includes a TA value and an object identifier corresponding to the TA value, or the target information includes a TA group identifier and a TA value, where the TA group identifier is used to indicate a first TA group, the first TA group is associated with the at least one object, and the TA value is a TA value of the terminal for the at least one object associated with the first TA group. An association relationship between the first TA group and the at least one object is explicitly or implicitly configured by a network. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex. Specifically, the TA group identifier may be indicated by O bits, where the value of O is

$$\lfloor \log_2 K \rfloor$$

, and K is the maximum number of TA groups that the terminal can maintain under the first object or the maximum number of TA groups that the terminal can maintain under the at least one object. In a case that the UE can maintain two TAs in one cell, if a TA group identifier in the RAR is 0, it means that the current RAR carries a TA with a corresponding TAG id=0; or if the TA group identifier in RAR is 1, it means that the current RAR carries a TA with a corresponding TAG id=1. If the RAR is Msg B corresponding to CFRA triggered by a PDCCH Order, and the object identifier is indicated in the PDCCH Order, the terminal does not need to decode the TA identifier group information.

In some embodiments, in a case of monitoring the RAR on the at least one object, a behavior of the terminal satisfies one of the following:

> a measurement or scheduling behavior of the terminal on a second object is not limited, where the second object is an object currently providing a service to the terminal;
> on a resource for monitoring a RAR by the terminal, the terminal refrains from monitoring a downlink signal of the second object, and/or on the resource for monitoring a RAR by the terminal, the terminal send no uplink signal to the second object; and
> on a time domain resource of a third target resource, the terminal refrains from monitoring a downlink signal of the second object, and/or on the time domain resource of the third target resource, the terminal send no uplink signal to the second object, where a difference between the 1st symbol of the third target resource and the 1st symbol of the resource for monitoring the RAR by the terminal is X3 symbols, and a difference between the last symbol of the third target resource and the last symbol of the resource for monitoring the RAR by the terminal is Y3 symbols; where X3 and Y3 are positive integers.

To sum up, in this embodiment of this application, the terminal can obtain the TA value of the first object through the target signaling sent by the network-side device, so that the terminal can obtain and maintain TA values of a plurality of TRPs. Compared with a conventional method that one TA value corresponds to one cell, that is, all TRPs in the cell use one TA value, maintaining the TA values of the plurality of TRPs reduces the TA granularity, improves accuracy and correctness of uplink synchronization, and greatly improves reliability and effectiveness of multi-TRP transmission.

The information obtaining apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The information obtaining apparatus provided in this embodiment of this application is capable of implementing the processes implemented in the method embodiments in FIG. 6, with the same technical effects achieved. To avoid repetition, details are not described herein again.

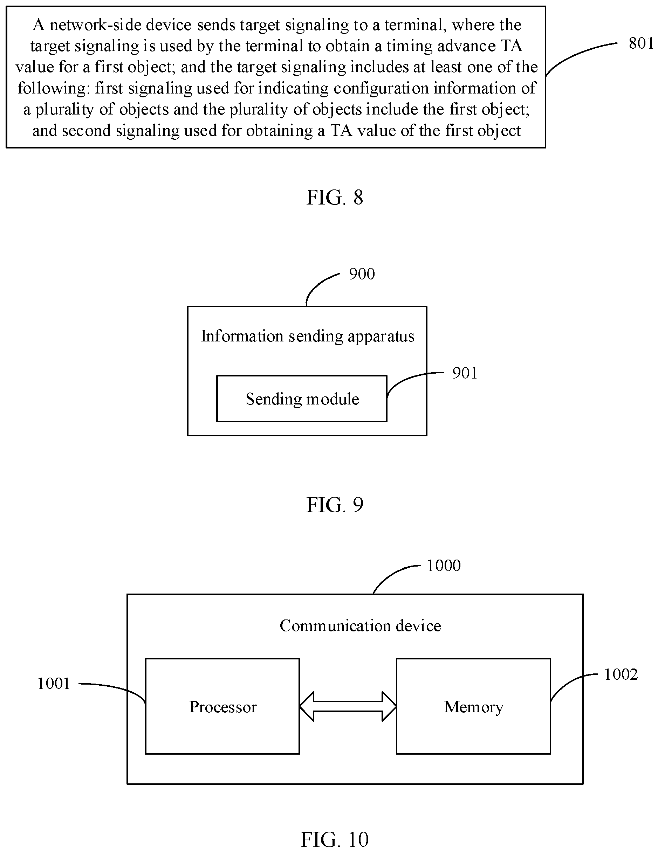

FIG. 8 is a flowchart of another information sending method according to an embodiment of this application. As shown in FIG. 8, the information sending method includes the following steps.

Step 801: A network-side device sends target signaling to a terminal, where the target signaling is used by the terminal to obtain a timing advance TA value for a first object; and the target signaling includes at least one of the following: first signaling, where the first signaling is used for indicating configuration information of a plurality of objects and the plurality of objects include the first object; and second signaling, where the second signaling is used for obtaining a TA value of the first object.

In some embodiments, the second signaling includes a target field and a TA value, where the target field is used for indicating the first object, and the TA value is the TA value of the terminal for the first object.

In some embodiments, the second signaling includes a TA group identifier and a TA value, where the TA group identifier is used for indicating a first TA group, the first TA group is associated with the first object, and the TA value is a TA value of the terminal for an object associated with the first TA group. An association relationship between the first TA group and the first object is explicitly or implicitly configured by a network. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex.

In some embodiments, the second signaling is used for activating at least one RACH resource of the first object, and the activated RACH resource is used for obtaining the TA value of the first object.

In some embodiments, a channel used for carrying the second signaling is associated with the first object. Specifically, the association relationship includes at least one of the following: an object identifier associated with beam indication information corresponding to the channel carrying the second signaling is the same as an identifier of the first object; an object identifier corresponding to a resource group identifier that is corresponding to the channel carrying the second signaling is the same as the identifier of the first object; and an object identifier associated with activated beam indication information that is associated with the resource group identifier corresponding to the channel carrying the second signaling is the same as the identifier of the first object. A correspondence between the resource group identifier corresponding to the channel carrying the second signaling and the identifier of the object is explicitly configured by RRC. In this case, the first object may be determined by the object identifier associated with the beam indication information corresponding to the channel carrying the second signaling, or by the object identifier corresponding to a resource group identifier that is corresponding to the channel carrying the second signaling, or by the object identifier associated with activated beam indication information that is associated with the resource group identifier corresponding to the channel carrying the second signaling.

In some embodiments, the second signaling includes at least one of the following:

first indication information, where the first indication information is used for indicating one or more preamble indexes;
second indication information, where the second indication information is used for indicating one or more reference signal RS indexes;
third indication information, where the third indication information is used for indicating a preamble mask index; and
fourth indication information, where the fourth indication information is used for indicating an identifier of the first object.

In some embodiments, an RS corresponding to the one or more RS indexes is associated with the first object.

In some embodiments, the configuration information of the plurality of objects includes at least one of the following:

configuration information of a second object, where the second object and the first object have different object identifiers;
configuration information of at least one candidate object, where the at least one candidate object includes the first object;
a reference timing difference between each candidate object and the second object;
uplink synchronization indication information of each candidate object; and
downlink synchronization indication information of each candidate object.

In some embodiments, the configuration information of the at least one candidate object includes at least one of RS resource, RACH resource, control channel resource, and data channel resource.

In this embodiment of this application, the network-side device sends the target signaling to the terminal, and the terminal can obtain the TA value of the first object through the target signaling, so that the terminal needs to obtain and maintain TA values of a plurality of TRPs. Compared with a conventional method that one TA value corresponds to one cell, that is, all TRPs in the cell use one TA value, maintaining the TA values of the plurality of TRPs reduces the TA granularity, improves accuracy and correctness of uplink synchronization, and greatly improves reliability and effectiveness of multi-TRP transmission.

For the information sending method provided in the embodiments of this application, the execution subject may be an information sending apparatus. In the embodiments of this application, the information sending method being performed by the information sending apparatus is used as an example to describe the information sending apparatus provided in the embodiments of this application.

FIG. 9 is a structural diagram of another information sending apparatus according to an embodiment of this application. As shown in FIG. 9, the information sending apparatus 900 includes:

a sending module 901, configured to send target signaling to a terminal, where the target signaling is used by the terminal to obtain a timing advance TA value for a first object; and
the target signaling includes at least one of the following:

first signaling, where the first signaling is used for indicating configuration information of a plurality of objects and the plurality of objects include the first object; and
second signaling, where the second signaling is used for obtaining a TA value of the first object.

In some embodiments, the second signaling includes a target field and a TA value, where the target field is used for indicating the first object, and the TA value is the TA value of the terminal for the first object.

In some embodiments, the second signaling includes a TA group identifier and a TA value, where the TA group identifier is used for indicating a first TA group, the first TA group is associated with the first object, and the TA value is a TA value of the terminal for an object associated with the first TA group. An association relationship between the first TA group and the first object is explicitly or implicitly configured by a network. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex.

In some embodiments, the second signaling is used for activating at least one RACH resource of the first object, and the activated RACH resource is used for obtaining the TA value of the first object.

In some embodiments, a channel used for carrying the second signaling is associated with the first object. Specifically, the association relationship includes at least one of the following: an object identifier associated with beam indication information corresponding to the channel carrying the second signaling is the same as an identifier of the first object; an object identifier corresponding to a resource group identifier that is corresponding to the channel carrying the second signaling is the same as the identifier of the first object; and an object identifier associated with activated beam indication information that is associated with the resource group identifier corresponding to the channel carrying the second signaling is the same as the identifier of the first object. A correspondence between the resource group identifier corresponding to the channel carrying the second signaling and the identifier of the object is explicitly configured by RRC. In this case, the first object may be determined by the object identifier associated with the beam indication information corresponding to the channel carrying the second signaling, or by the object identifier corresponding to a resource group identifier that is corresponding to the channel carrying the second signaling, or by the object identifier associated with activated beam indication information that is associated with the resource group identifier corresponding to the channel carrying the second signaling.

In some embodiments, the second signaling includes at least one of the following:

first indication information, where the first indication information is used for indicating one or more preamble indexes;
second indication information, where the second indication information is used for indicating one or more reference signal RS indexes;
third indication information, where the third indication information is used for indicating a preamble mask index; and
fourth indication information, where the fourth indication information is used for indicating an identifier of the first object.

In some embodiments, an RS corresponding to the one or more RS indexes is associated with the first object.

In some embodiments, the configuration information of the plurality of objects includes at least one of the following:

configuration information of a second object, where the second object and the first object have different object identifiers;
configuration information of at least one candidate object, where the at least one candidate object includes the first object;
a reference timing difference between each candidate object and the second object;
uplink synchronization indication information of each candidate object; and
downlink synchronization indication information of each candidate object.

In some embodiments, the configuration information of the at least one candidate object includes at least one of RS resource, RACH resource, control channel resource, and data channel resource.

In this embodiment of this application, the network-side device sends the target signaling to the terminal, and the terminal can obtain the TA value of the first object through the target signaling, so that the terminal needs to obtain and maintain TA values of a plurality of TRPs. Compared with a conventional method that one TA value corresponds to one cell, that is, all TRPs in the cell use one TA value, maintaining the TA values of the plurality of TRPs reduces the TA granularity, improves accuracy and correctness of uplink synchronization, and greatly improves reliability and effectiveness of multi-TRP transmission.

The information sending apparatus in this embodiment of this application may be an electronic device, such as an electronic device with an operating system, or a component in the electronic device, such as an integrated circuit or a chip. The electronic device may be a network-side device or other devices than the network-side device. For example, the network-side device may include, but is not limited to, the types of the network-side device 12 listed above, which is not specifically limited in this embodiment of this application.

The information sending apparatus provided in this embodiment of this application is capable of implementing the processes implemented in the method embodiments in FIG. 8, with the same technical effects achieved. To avoid repetition, details are not described herein again.

As shown in FIG. 10, an embodiment of this application further provides a communication device 1000, including a processor 1001 and a memory 1002, and a program or instruction capable of running on the processor 1001 is stored in the memory 1002. For example, when the communication device 1000 is a terminal and when the program or instruction is executed by the processor 1001, the steps of the foregoing embodiments of the information obtaining method are implemented, with the same technical effects achieved. When the communication device 1000 is a network-side device and when the program or instruction is executed by the processor 1001, the steps of the foregoing embodiments of the information sending method are implemented, with the same technical effects achieved. To avoid repetition, details are not described herein again.

An embodiment of this application further provides a terminal, including a processor and a communication interface, where the processor or the communication interface is configured to receive target signaling sent by a network-side device, and obtain a timing advance TA value of a terminal for a first object according to the target signaling, where the target signaling is signaling obtained before the terminal accesses the first object. The terminal embodiments correspond to the foregoing terminal-side method embodiments, and the implementation processes and implementations of the foregoing method embodiments can be applied to the terminal embodiments, with the same technical effects achieved.

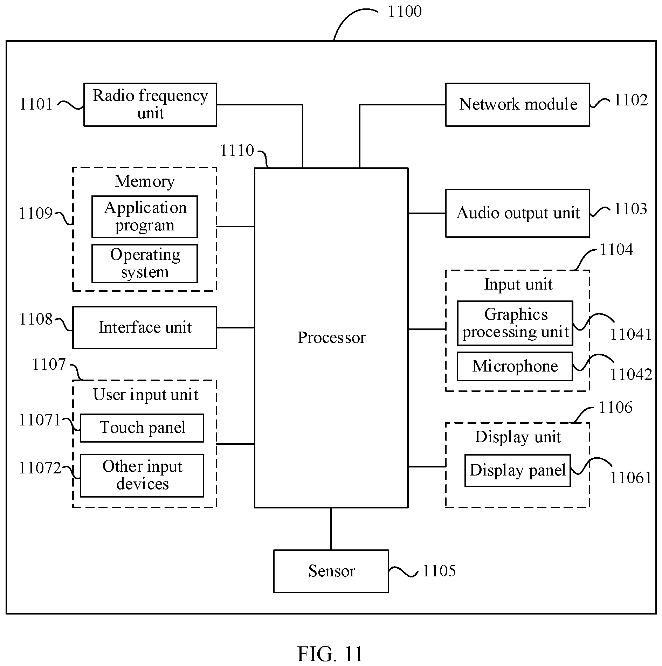

Specifically, FIG. 11 is a schematic diagram of a hardware structure of a terminal for implementing the embodiments of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then sends the downlink data to the processor 1110 for processing. In addition, the radio frequency unit 1101 may send uplink data to the network-side device. Generally, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may include a first storage area for storing a program or instruction and a second storage area for storing data. The first storage area may store an operating system, an application program or instruction required by at least one function (for example, a sound playback function or an image playback function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1109 in the embodiments of this application includes but is not limited to these and any other suitable types of memories.

The processor 1110 may include one or more processing units. Optionally, an application processor and a modem processor may be integrated in the processor 1110. The application processor primarily processes operations involving an operating system, user interfaces, application programs, and the like. The modem processor primarily processes radio communication signals, for example, being a baseband processor. It can be understood that the modem processor may alternatively be not integrated in the processor 1110.

The radio frequency unit 1101 is configured to: receive target signaling sent by a network-side device.

The radio frequency unit 1101 or the processor 1110 is configured to:

obtain a timing advance TA value of a terminal for a first object according to the target signaling; where the target signaling is signaling obtained before the terminal accesses the first object.

In this embodiment of this application, the terminal can obtain the TA value for the first object before accessing the first object, which can reduce a data interruption time caused by cell handover. In addition, this can also reduce a delay of handover to the first object performed by the terminal and ensure the stability of data transmission. Especially for asynchronous scenarios, the delay of the terminal can be greatly reduced and the mobility management efficiency can be improved.

In some embodiments, the target signaling includes at least one of the following:

first signaling, where the first signaling is used for indicating configuration information of a plurality of objects and the plurality of objects include the first object;
second signaling, where the second signaling is used for indicating information about the first object; and

third signaling, where the third signaling is used for obtaining a TA value of the first object.

In some embodiments, the first signaling, the second signaling, and the third signaling satisfy:

the first signaling and the second signaling are different signaling, and the second signaling and the third signaling are same signaling; or, the first signaling, the second signaling, and the third signaling are different signaling.

In some embodiments, the second signaling includes a target field, and the target field is used for indicating the first object.

In some embodiments, the second signaling includes beam indication information, and the beam indication information is associated with the first object.

In some embodiments, the radio frequency unit 1101 or the processor 1110 is further configured to: in a case that the second signaling and the third signaling are same signaling, obtain the TA value of the terminal for the first object based on a RACH resource associated with a quasi co-location source RS corresponding to the beam indication information carried in the second signaling.

In some embodiments, the second signaling carries a TA value; and the processor 1110 is further configured to: determine the TA value carried in the second signaling as the TA value of the terminal for the first object.

In some embodiments, the third signaling is used for activating at least one RACH resource of at least one object, and the activated RACH resource is used for obtaining a TA value of the at least one object.

In some embodiments, the third signaling includes at least one of the following:

first indication information, where the first indication information is used for indicating one or more preamble indexes; second indication information, where the second indication information is used for indicating one or more reference signal RS indexes; third indication information, where the third indication information is used for indicating a preamble mask index; fourth indication information, where the fourth indication information is used for indicating an identifier of the at least one object; fifth indication information, where the fifth indication information is used for indicating a configuration information index of the at least one object; and sixth indication information, where the sixth indication information is used for indicating frequency domain indication information of the at least one object; where

the at least one object includes the first object.

In some embodiments, the configuration information of the plurality of objects includes at least one of the following:

configuration information of a second object, where the second object is an object currently providing a service to the terminal; configuration information of at least one candidate object, where the at least one candidate object includes the first object; a reference timing difference between each candidate object and the second object; uplink synchronization indication information of each candidate object; and downlink synchronization indication information of each candidate object.

In some embodiments, the configuration information of the at least one candidate object includes:

all of configuration information of each candidate object configured in a unit of one candidate object; or, part of configuration information of each candidate object configured in a unit of one candidate object.

In some embodiments, the processor 1110 is further configured to:

determine a reference timing difference between the first object and a second object and a downlink reception time difference between the first object and the second object according to the first signaling and the second signaling; and determine the TA value of the terminal for the first object based on a TA value of the second object, the reference timing difference between the first object and the second object, and the downlink reception time difference between the first object and the second object.

In some embodiments, the processor 1110 is further configured to: obtain the TA value of the terminal for the first object according to the first signaling and the second signaling, where the TA value of the terminal for the first object is the same as a TA value of the terminal for a second object.

In some embodiments, the target signaling includes the first signaling, the radio frequency unit 1101 is further configured to:

send a channel sounding reference signal SRS to the network-side device, where the SRS is used for obtaining a TA value of the terminal for at least one object; and

receive second signaling, where the second signaling carries target information of the terminal for the at least one object, and the target information includes a TA value, or the target information includes a TA value and an object identifier corresponding to the TA value, or the target information includes a TA group identifier and a TA value; where the TA group identifier is used for indicating a first TA group, the first TA group is associated with the at least one object, and the TA value is a TA value of the terminal for the at least one object associated with the first TA group; where an association relationship between the first TA group and the at least one object is explicitly or implicitly configured by a network, and the at least one object includes the first object. Specifically, the TA group identifier may be indicated by O bits, where the value of O is $\lfloor \log_2 K \rfloor$, and K is the maximum number of TA groups that the terminal can maintain under the first object or the maximum number of TA groups that the terminal can maintain under the at least one object.

In some embodiments, the SRS is determined according to the configuration information in the first signaling; or the SRS is activated by the third signaling in a case that the target signaling further includes the third signaling.

In some embodiments, beam indication information of the SRS is associated with an identifier of the at least one object, and the SRS is sent based on timing information of a second object, where the second object is an object currently providing a service to the terminal.

In some embodiments, the processor 1110 is further configured to:

determine a first RACH resource for uplink synchronization of at least one object according to the first signaling and the third signaling.

The radio frequency unit 1101 is further configured to:

send a preamble on the first RACH resource; and receive a TA value of the terminal for the at least one object sent by the network-side device, where the 1st symbol of the third signaling is earlier than the 1st symbol of the second signaling, and the at least one object includes the first object.

In some embodiments, the processor 1110 is further configured to:

in a case that a second object is determined to be in downlink synchronization with the at least one object according to the configuration information of the plurality of objects, determine the first RACH resource for uplink synchronization of the at least one object based on timing information of the second object, where the second object is an object currently providing a service to the terminal; or,

after a reference timing difference between the second object and the at least one object is determined according to the configuration information of the plurality of objects, determine a first RACH resource for uplink synchronization of the at least one object based on the timing information of the second object and the reference timing difference.

In some embodiments, in a case that the terminal sends the preamble on the first RACH resource, a behavior of the terminal satisfies one of the following:

a measurement or scheduling behavior of the terminal on a second object is not limited, where the second object is an object currently providing a service to the terminal;

on a time domain resource of the first RACH resource, the terminal send no uplink signal to the second object;

on a time domain resource of a first target resource, the terminal send no uplink signal to the second object, where a difference between the 1st symbol of the first target resource and the 1st symbol of the first RACH resource is X1 symbols, and a difference between the last symbol of the first target resource and the last symbol of the first RACH resource is Y1 symbols, where both X1 and Y1 are positive integers;

in a case that an uplink signal of the second object meets a preset condition, the terminal send no uplink signal to the second object;

the terminal refrains from monitoring a first target downlink signal, where the first target downlink signal is transmitted on a RACH resource for uplink synchronization of the second object, and the first target downlink signal is a downlink signal of the second object;

the terminal refrains from monitoring a second target downlink signal, where the second target downlink signal is transmitted on a time domain resource corresponding to the RACH resource for uplink synchronization of the second object, and the second target downlink signal is a downlink signal of the second object; and

the terminal refrains from monitoring a second target downlink signal transmitted on a time domain resource of a second target resource, where a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, where X2 and Y2 are positive integers.

In some embodiments, the preset condition includes at least one of the following:

an interval between the 1st symbol of the uplink signal of the second object and the last symbol corresponding to the first RACH resource is less than a first threshold; and
an interval between the last symbol of the uplink signal of the second object and the 1st symbol corresponding to the first RACH resource is less than a second threshold.

In some embodiments, the radio frequency unit 1101 is further configured to:
monitor a RAR on a second object to obtain target information of the terminal for the at least one object, or monitor a RAR on the at least one object to obtain the target information of the terminal for the at least one object, where the target information includes a TA value, or the target information includes a TA value and an object identifier corresponding to the TA value, or the target information includes a TA group identifier and a TA value, where the TA group identifier is used to indicate a first TA group, the first TA group is associated with the at least one object, and the TA value is a TA value of the terminal for the at least one object associated with the first TA group. an association relationship between the first TA group and the at least one object is explicitly or implicitly configured by a network, and the at least one object includes the first object. Specifically, the TA group identifier may be indicated by O bits, where the value of O is

$$\lfloor \log_2 K \rfloor$$

, and K is the maximum number of TA groups that the terminal can maintain under the first object or the maximum number of TA groups that the terminal can maintain under the at least one object. In a case that the UE can maintain two TAs in one cell, if a TA group identifier in the RAR is 0, it means that the current RAR carries a TA with a corresponding TAG id=0; or if the TA group identifier in RAR is 1, it means that the current RAR carries a TA with a corresponding TAG id=1. If the RAR is Msg B corresponding to CFRA triggered by a PDCCH Order, and the object identifier is indicated in the PDCCH Order, the terminal does not need to decode the TA identifier group information.

In some embodiments, in a case that the terminal monitors the RAR on the at least one object, a behavior of the terminal satisfies one of the following:

a measurement or scheduling behavior of the terminal on a second object is not limited, where the second object is an object currently providing a service to the terminal;
on a resource for monitoring a RAR by the terminal, the terminal refrains from monitoring a downlink signal of the second object, and/or on the resource for monitoring a RAR by the terminal, the terminal send no uplink signal to the second object; and
on a time domain resource of a third target resource, the terminal refrains from monitoring a downlink signal of the second object, and/or on the time domain resource of the third target resource, the terminal send no uplink signal to the second object, where a difference between the 1st symbol of the third target resource and the 1st symbol of the resource for monitoring the RAR by the terminal is X3 symbols, and a difference between the last symbol of the third target resource and the last symbol of the resource for monitoring the RAR by the terminal is Y3 symbols; where X3 and Y3 are positive integers.

In some embodiments, the processor 1110 is configured to: in a case that the terminal receives a RAR carrying target information for the at least one object, start or restart a first timer associated with the target information.

In some embodiments, the first timer is a timer associated with the first TA group, and configuration information of timers associated with different first TA groups is the same or different.

In some embodiments, the processor 1110 is configured to: perform a first operation in a case that a RAR carrying target information for the at least one object is received, and at least one piece of fourth signaling is received.

In some embodiments, the fourth signaling is MAC CE signaling used for updating a TA of the second object.

In some embodiments, the first operation includes at least one of the following:

updating a TA value of a first TA group to which a third object belongs, based on a TA adjustment value carried in the fourth signaling, a downlink reception time difference between the third object and the second object, and a downlink time difference between the third object and the second object; and
restarting a timer of the first TA group to which the third object belongs.

In some embodiments, the third object satisfies at least one of the following conditions:

the third object is at least one object in a third object group, where the third object group is an object list for which the terminal obtains or updates a TA by performing the first operation, the number of associated first TA groups for the third object group is configured or indicated by the network, and object information included in the third object group is configured by the network or determined by the terminal according to a first default rule; and
the third object is at least one object in a fourth object group, where the fourth object group is an object list for which a TA value is obtained through a RACH resource activated by the third signaling, and object information included in the fourth object group and the number of associated first TA groups for the fourth object group are configured or indicated by the network.

In some embodiments, the terminal expects that the number of associated first TA groups for the third object group is the same as the number of associated first TA groups for the fourth object group.

In some embodiments, the processor 1110 is configured to: in a case that the terminal expects that the number of associated first TA groups for the third object group is less than the number of associated first TA groups for the fourth object group, determine the third object group from the fourth object group according to the first default rule.

In some embodiments, the processor 1110 is configured to: before the second signaling for indicating the information about the first object is received, in a case that a timer corresponding to a first TA group to which a fifth object belongs has expired, re-obtain a TA of the fifth object through a RACH procedure, where the fifth object is at least one object included in the fourth object group but not included in the third object group.

In some embodiments, in a case that the second signaling for indicating the information about the first object is received, the processor 1110 is configured to:

in a case that a first timer corresponding to a first TA group to which the first object belongs has expired, obtain a TA of the first object through a RACH procedure; and/or
in a case that the first timer corresponding to the first TA group to which the first object belongs has not expired, perform uplink transmission based on the TA value of the first object.

To sum up, in this embodiment of this application, the terminal can obtain the TA value for the first object before accessing the first object, which can reduce a data interruption time caused by cell handover and reduce a interruption time between the terminal and the current serving object, thereby reducing an interruption delay. In addition, this can also reduce a delay of cell handover performed by the terminal and ensure the stability of data transmission. Especially for asynchronous scenarios, the delay of the terminal can be greatly reduced and the mobility management efficiency can be improved.

An embodiment of this application further provides a terminal, including a processor and a communication interface, where the processor or the communication interface is configured to receive target signaling sent by a network-side device, and obtain a timing advance TA value of a terminal for a first object according to the target signaling, where the target signaling includes at least one of the following: first signaling, where the first signaling is used for indicating configuration information of a plurality of objects and the plurality of objects include the first object; and second signaling, where the second signaling is used for obtaining a TA value of the first object. The terminal embodiments correspond to the foregoing terminal-side method embodiments, and the implementation processes and implementations of the foregoing method embodiments can be applied to the terminal embodiments, with the same technical effects achieved.

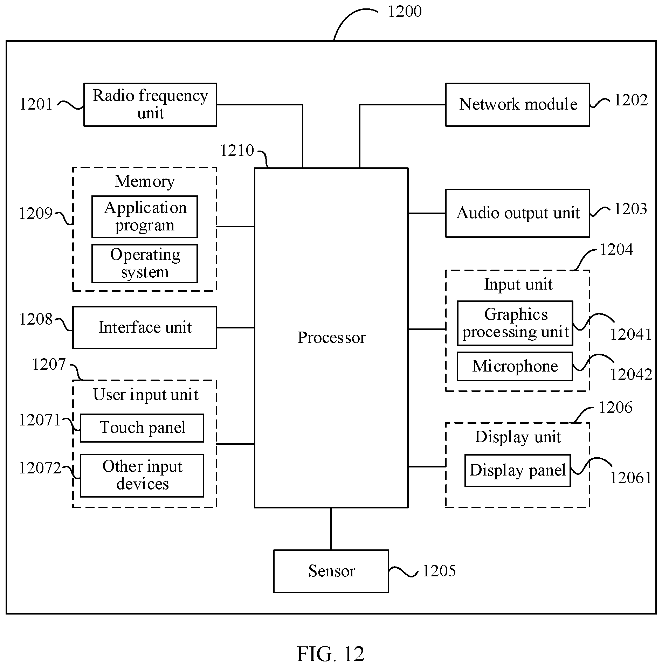

Specifically, FIG. 12 is a schematic diagram of a hardware structure of another terminal for implementing the embodiments of this application.

The terminal 1200 includes but is not limited to at least part of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the terminal 1200 may further include a power supply (for example, a battery) supplying power to the components, and the power supply may be logically connected to the processor 1210 through a power management system. In this way, functions such as charge management, discharge management, and power consumption management are implemented by using the power management system. The structure of the terminal shown in FIG. 12 does not constitute any limitation on the terminal. The terminal may include more or fewer components than shown in the figure, or a combination of some components, or the components disposed differently. Details are not described herein again.

It can be understood that in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, and the like. The user input unit 1207 may include at least one of a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or a power on/off key), a trackball, a mouse, a joystick, and the like. Details are not described herein.

In this embodiment of this application, the radio frequency unit 1201 receives downlink data from a network-side device, and then sends the downlink data to the processor 1210 for processing. In addition, the radio frequency unit 1201 may send uplink data to the network-side device. Generally, the radio frequency unit 1201 includes but is not limited to an antenna, an amplifier, a transceiver, a coupler, a low noise amplifier, a duplexer, and the like.

The memory 1209 may be configured to store software programs or instructions and various data. The memory 1209 may include a first storage area for storing a program or instruction and a second storage area for storing data. The first storage area may store an operating system, an application program or instruction required by at least one function (for example, a sound playback function or an image playback function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1209 in the embodiments of this application includes but is not limited to these and any other suitable types of memories.

The processor 1210 may include one or more processing units. Optionally, an application processor and a modem processor may be integrated in the processor 1210. The application processor primarily processes operations involving an operating system, user interfaces, application programs, and the like. The modem processor primarily processes radio communication signals, for example, being a baseband processor. It can be understood that the modem processor may alternatively be not integrated in the processor 1210.

The radio frequency unit 1201 is configured to: receive target signaling sent by a network-side device.

The radio frequency unit 1201 or the processor 1210 is configured to:

obtain a timing advance TA value of the terminal for a first object according to the target signaling; where the target signaling includes at least one of the following:

first signaling, where the first signaling is used for indicating configuration information of a plurality of objects and the plurality of objects include the first object; and

second signaling, where the second signaling is used for obtaining a TA value of the first object.

This embodiment of this application includes two scenarios. One scenario is that the terminal has not accessed or does not access the first object, but may transmit data with the first object. In this case, the first object may be a TRP of a neighboring cell of the current serving cell. The other scenario is that a plurality of TRPs are configured in the current serving cell, and all of the TRPs may provide a data transmission service to the terminal, where the first object is one of the TRPs.

In this embodiment of this application, the terminal can obtain the TA value of the first object through the target signaling sent by the network-side device, so that the terminal needs to obtain and maintain TA values of a plurality of TRPs. Compared with a conventional method that one TA value corresponds to one cell, that is, all TRPs in the cell use one TA value, maintaining the TAs of the plurality of TRPs reduces the TA granularity, improves accuracy and correctness of uplink synchronization, and greatly improves reliability and effectiveness of multi-TRP transmission.

In some embodiments, the second signaling includes a target field and a TA value, where the target field is used for indicating the first object, and the TA value is the TA value of the terminal for the first object.

In some embodiments, the second signaling includes a TA group identifier and a TA value, where the TA group identifier is used for indicating a first TA group, the first TA group is associated with the first object, and the TA value is a TA value of the terminal for an object associated with the first TA group. An association relationship between the first TA group and the first object is explicitly or implicitly configured by a network. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex.

In some embodiments, the second signaling is used for activating at least one RACH resource of the first object, and the activated RACH resource is used for obtaining the TA value of the first object.

In some embodiments, a channel used for carrying the second signaling is associated with the first object. Specifically, the association relationship includes at least one of the following: an object identifier associated with beam indication information corresponding to the channel carrying the second signaling is the same as an identifier of the first object; an object identifier corresponding to a resource group identifier that is corresponding to the channel carrying the second signaling is the same as the identifier of the first object; and an object identifier associated with activated beam indication information that is associated with the resource group identifier corresponding to the channel carrying the second signaling is the same as the identifier of the first object. A correspondence between the resource group identifier corresponding to the channel carrying the second signaling and the identifier of the object is explicitly configured by RRC. In this case, the first object may be determined by the object identifier associated with the beam indication information corresponding to the channel carrying the second signaling, or by the object identifier corresponding to a resource group identifier that is corresponding to the channel carrying the second signaling, or by the object identifier associated with activated beam indication information that is associated with the resource group identifier corresponding to the channel carrying the second signaling.

In some embodiments, the second signaling includes at least one of the following:

first indication information, where the first indication information is used for indicating one or more preamble indexes;
second indication information, where the second indication information is used for indicating one or more reference signal RS indexes;
third indication information, where the third indication information is used for indicating a preamble mask index; and
fourth indication information, where the fourth indication information is used for indicating an identifier of the first object.

In some embodiments, an RS corresponding to the one or more RS indexes is associated with the first object.

In some embodiments, the configuration information of the plurality of objects includes at least one of the following:

configuration information of a second object, where the second object and the first object have different object identifiers;
configuration information of at least one candidate object, where the at least one candidate object includes the first object;
a reference timing difference between each candidate object and the second object;
uplink synchronization indication information of each candidate object; and
downlink synchronization indication information of each candidate object.

In some embodiments, the configuration information of the at least one candidate object includes at least one of RS resource, RACH resource, control channel resource, and data channel resource.

In some embodiments, the processor 1210 is further configured to:

determine a reference timing difference between the first object and a second object and a downlink reception time difference between the first object and the second object according to the first signaling and the second signaling; and
obtain the TA value of the terminal for the first object based on a TA value of the second object, the reference timing difference between the first object and the second object, and the downlink reception time difference between the first object and the second object.

In some embodiments, the processor 1210 is further configured to:
obtain the TA value of the terminal for the first object according to the first signaling and the second signaling, where the TA value of the terminal for the first object is the same as a TA value of the terminal for a second object.

In some embodiments, the target signaling includes the first signaling, the radio frequency unit 1201 is further configured to:

send a channel sounding reference signal SRS to the network-side device, where the SRS is used for obtaining a TA value of the terminal for at least one object; and
receive second signaling, where the second signaling carries target information of the terminal for the at least one object, and the target information includes a TA value, or the target information includes a TA value and an object identifier corresponding to the TA value, or the target information includes a TA group identifier and a TA value; where the TA group identifier is used for indicating a first TA group, the first TA group is associated with the at least one object, and the TA value is a TA value of the terminal for the at least one object associated with the first TA group; where an association relationship between the first TA group and the at least one object is explicitly or implicitly configured by a network, and the at least one object includes the first object. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex. Specifically, the TA group identifier may be indicated by O bits, where the value of O is $\left\lfloor \log_2 K \right\rfloor$, and K

is the maximum number of TA groups that the terminal can maintain under the first object or the maximum number of TA groups that the terminal can maintain under the at least one object.

In some embodiments, the SRS is determined according to the configuration information in the first signaling, or in a case that the target signaling further includes the third signaling, the SRS is activated by third signaling received by the terminal, where the 1st symbol of the third signaling is earlier than the 1st symbol of the second signaling.

In some embodiments, beam indication information of the SRS is associated with an identifier of the at least one object, and the SRS is sent based on timing information of a second object.

In some embodiments, the processor 1210 is further configured to:

determine a first RACH resource for uplink synchronization of at least one object according to the first signaling or according to the first signaling and the second signaling;

send a preamble on the first RACH resource; and receive a TA value of the terminal for the at least one object sent by the network-side device, where the at least one object includes the first object.

In some embodiments, the processor 1210 is further configured to:

in a case that a second object is determined to be in downlink synchronization with the at least one object according to the configuration information of the plurality of objects, determine the first RACH resource for uplink synchronization of the at least one object based on timing information of the second object;

or,

after a reference timing difference between the second object and the at least one object is determined according to the configuration information of the plurality of objects, determine a first RACH resource for uplink synchronization of the at least one object based on the timing information of the second object and the reference timing difference.

In some embodiments, in a case that the terminal sends the preamble on the first RACH resource, a behavior of the terminal satisfies one of the following:

a measurement or scheduling behavior of the terminal on a second object is not limited, where the second object is an object currently providing a service to the terminal;

on a time domain resource of the first RACH resource, the terminal send no uplink signal to the second object;

on a time domain resource of a first target resource, the terminal send no uplink signal to the second object, where a difference between the 1st symbol of the first target resource and the 1st symbol of the first RACH resource is X1 symbols, and a difference between the last symbol of the first target resource and the last symbol of the first RACH resource is Y1 symbols, where both X1 and Y1 are positive integers;

in a case that an uplink signal of the second object meets a preset condition, the terminal send no uplink signal to the second object;

the terminal refrains from monitoring a first target downlink signal, where the first target downlink signal is transmitted on a RACH resource for uplink synchronization of the second object, and the first target downlink signal is a downlink signal of the second object;

the terminal refrains from monitoring a second target downlink signal, where the second target downlink signal is transmitted on a time domain resource corresponding to the RACH resource for uplink synchronization of the second object, and the second target downlink signal is a downlink signal of the second object; and

the terminal refrains from monitoring a second target downlink signal transmitted on a time domain resource of a second target resource, where a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, where X2 and Y2 are positive integers.

In some embodiments, the preset condition includes at least one of the following:

an interval between the 1st symbol of the uplink signal of the second object and the last symbol corresponding to the first RACH resource is less than a first threshold; and

an interval between the last symbol of the uplink signal of the second object and the 1st symbol corresponding to the first RACH resource is less than a second threshold.

In some embodiments, the radio frequency unit 1201 is further configured to:

monitor a RAR on a second object to obtain target information of the terminal for the at least one object, or monitor a RAR on the at least one object to obtain the target information of the terminal for the at least one object, where the target information includes a TA value, or the target information includes a TA value and an object identifier corresponding to the TA value, or the target information includes a TA group identifier and a TA value, where the TA group identifier is used to indicate a first TA group, the first TA group is associated with the at least one object, and the TA value is a TA value of the terminal for the at least one object associated with the first TA group. An association relationship between the first TA group and the at least one object is explicitly or implicitly configured by a network, and the at least one object includes the first object. Specifically, an association relationship between TA groups and CORESETPoolindex is configured by RRC. After receiving the second signaling, the terminal determines, based on a TA group identifier carried in the second signaling, CORESETPoolindex associated with the TA group identifier, and applies a TA value carried in the second signaling to all uplink channels and signals associated with CORESETPoolindex. Specifically, the TA group identifier may be indicated by O bits, where the value of O is $\left\lfloor \log_2 K \right\rfloor$ , and K is the maximum number of TA groups that the terminal can maintain under the first object or the maximum number of TA groups that the terminal can maintain under the at least one object. In a case that the UE can maintain two TAs in one cell, if a TA group identifier in the RAR is 0, it means that the current RAR carries a TA with a corresponding TAG id=0; or if the TA group identifier in RAR is 1, it means that the current RAR carries a TA with a corresponding TAG id=1. If the RAR is Msg B corresponding to CFRA triggered by a PDCCH Order, and the object identifier is indicated in the PDCCH Order, the terminal does not need to decode the TA identifier group information.

In some embodiments, in a case of monitoring the RAR on the at least one object, a behavior of the terminal satisfies one of the following:

a measurement or scheduling behavior of the terminal on a second object is not limited, where the second object is an object currently providing a service to the terminal;
on a resource for monitoring a RAR by the terminal, the terminal refrains from monitoring a downlink signal of the second object, and/or on the resource for monitoring a RAR by the terminal, the terminal send no uplink signal to the second object; and
on a time domain resource of a third target resource, the terminal refrains from monitoring a downlink signal of the second object, and/or on the time domain resource of the third target resource, the terminal send no uplink signal to the second object, where a difference between the 1st symbol of the third target resource and the 1st symbol of the resource for monitoring the RAR by the terminal is X3 symbols, and a difference between the last symbol of the third target resource and the last symbol of the resource for monitoring the RAR by the terminal is Y3 symbols; where X3 and Y3 are positive integers.

An embodiment of this application further provides a network-side device is provided, including a processor and a communication interface, where the communication interface is configured to send target signaling to a terminal, where the target signaling is used by the terminal to obtain a timing advance TA value for a first object, and the target signaling is signaling sent by the network-side device before the terminal accesses the first object. The network-side device embodiments correspond to the foregoing network-side device method embodiments, and the implementation processes and implementations of the foregoing method embodiments can be applied to the network-side device embodiments, with the same technical effects achieved.

An embodiment of this application further provides another network-side device is provided, including a processor and a communication interface, where the communication interface is configured to send target signaling to a terminal, where the target signaling is used by the terminal to obtain a timing advance TA value for a first object. The target signaling includes at least one of the following: first signaling, where the first signaling is used for indicating configuration information of a plurality of objects and the plurality of objects include the first object; and second signaling, where the second signaling is used for obtaining a TA value of the first object. The network-side device embodiments correspond to the foregoing network-side device method embodiments, and the implementation processes and implementations of the foregoing method embodiments can be applied to the network-side device embodiments, with the same technical effects achieved.

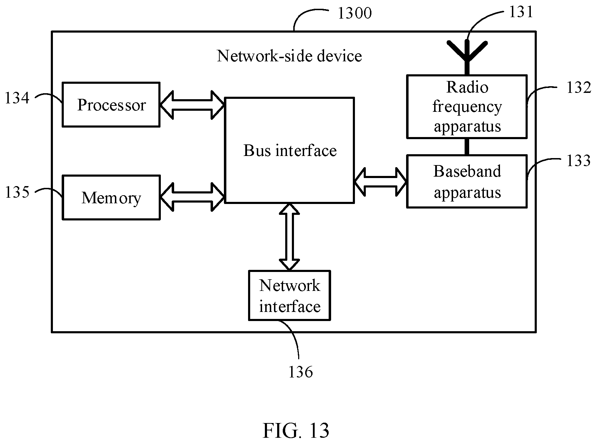

Specifically, an embodiment of this application further provides a network-side device. As shown in FIG. 13, the network-side device 1300 includes an antenna 131, a radio frequency apparatus 132, a baseband apparatus 133, a processor 134, and a memory 135. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes to-be-sent information, and sends the information to the radio frequency apparatus 132; and the radio frequency apparatus 132 processes the received information and then sends the information out by using the antenna 131.

The method executed by the network-side device in the foregoing embodiments can be implemented in the baseband apparatus 133, and the baseband apparatus 133 includes a baseband processor.

The baseband apparatus 133 may include, for example, at least one baseband board, where a plurality of chips are disposed on the baseband board. As shown in FIG. 13, one of the chips is, for example, a baseband processor, and is connected to the memory 135 through the bus interface, to invoke a program in the memory 135 to perform the operations of the network device shown in the foregoing method embodiments.

The network-side device may further include a network interface 136, where the interface is, for example, a common public radio interface (common public radio interface, CPRI).

Specifically, the network-side device 1300 in this embodiment of this application further includes: an instruction or program stored in the memory 135 and capable of running on the processor 134. The processor 134 invokes the instruction or program in the memory 135 to execute the method executed by the modules shown in FIG. 5 or FIG. 9, with the same technical effects achieved. To avoid repetition, details are not repeated herein.

An embodiment of this application further provides a readable storage medium, where a program or instruction is stored in the readable storage medium. When the program or instruction is executed by a processor, the processes of the foregoing embodiments of the information obtaining method or the foregoing embodiments of the information sending method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instruction to implement the processes of the foregoing embodiments of the information obtaining method or the foregoing embodiments of the information sending method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the information obtaining method or the foregoing embodiments of the information sending method, with the same technical effects achieved. To avoid repetition, details are not repeated herein.

An embodiment of this application further provides an information obtaining system, including a terminal and a network-side device, where the terminal can be configured to execute the steps of the embodiments of the information obtaining method described above, and the network-side device can be configured to execute the steps of the information sending method described above.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

**1.** An information obtaining method, comprising:

receiving, by a terminal, target signaling sent by a network-side device; and

obtaining, by the terminal, a timing advance TA value of the terminal for a first object according to the target signaling; wherein

the target signaling is signaling obtained before the terminal accesses the first object.

2. The method according to claim 1, wherein the target signaling comprises at least one of the following:

first signaling, wherein the first signaling is used for indicating configuration information of a plurality of objects and the plurality of objects comprise the first object;

second signaling, wherein the second signaling is used for indicating information about the first object; and

third signaling, wherein the third signaling is used for obtaining a TA value of the first object.

3. The method according to claim 2, wherein the first signaling, the second signaling, and the third signaling satisfy:

the first signaling and the second signaling are different signaling, and the second signaling and the third signaling are same signaling;

or

the first signaling, the second signaling, and the third signaling are different signaling.

4. The method according to claim 2, wherein the second signaling comprises a target field, and the target field is used for indicating the first object.

5. The method according to claim 2, wherein the second signaling comprises beam indication information, and the beam indication information is associated with the first object.

6. The method according to claim 5, wherein the obtaining, by the terminal, a TA value of the terminal for a first object according to the target signaling comprises:

in a case that the second signaling and the third signaling are same signaling, obtaining, by the terminal, the TA value of the terminal for the first object based on a Random Access Channel RACH resource associated with a quasi co-location source Reference Signal RS corresponding to the beam indication information carried in the second signaling.

7. The method according to claim 2, wherein the second signaling carries a TA value; and

the obtaining, by the terminal, a TA value of the terminal for a first object according to the target signaling comprises:

determining, by the terminal, the TA value carried in the second signaling as the TA value of the terminal for the first object.

8. The method according to claim 2, wherein the third signaling is used for activating at least one RACH resource of at least one object, and the activated RACH resource is used for obtaining a TA value of the at least one object.

9. The method according to claim 8, wherein the third signaling comprises at least one of the following:

first indication information, wherein the first indication information is used for indicating one or more preamble indexes;

second indication information, wherein the second indication information is used for indicating one or more reference signal RS indexes;

third indication information, wherein the third indication information is used for indicating a preamble mask index;

fourth indication information, wherein the fourth indication information is used for indicating an identifier of the at least one object;

fifth indication information, wherein the fifth indication information is used for indicating a configuration information index of the at least one object; and

sixth indication information, wherein the sixth indication information is used for indicating frequency domain indication information of the at least one object; wherein

the at least one object comprises the first object.

10. The method according to claim 2, wherein the configuration information of the plurality of objects comprises at least one of the following:

configuration information of a second object, wherein the second object is an object currently providing a service to the terminal;

configuration information of at least one candidate object, wherein the at least one candidate object comprises the first object;

a reference timing difference between each candidate object and the second object;

uplink synchronization indication information of each candidate object; and

downlink synchronization indication information of each candidate object.

11. The method according to claim 10, wherein the configuration information of the at least one candidate object comprises:

all of configuration information of each candidate object configured in a unit of one candidate object;

or

part of configuration information of each candidate object configured in a unit of one candidate object.

12. The method according to claim 2, wherein the obtaining, by the terminal, a TA value of the terminal for a first object according to the target signaling comprises:

determining, by the terminal, a reference timing difference between the first object and a second object and a downlink reception time difference between the first object and the second object according to the first signaling and the second signaling; and

determining, by the terminal, the TA value of the terminal for the first object based on a TA value of the second object, the reference timing difference between the first object and the second object, and the downlink reception time difference between the first object and the second object.

13. The method according to claim 2, wherein the obtaining, by the terminal, a TA value of the terminal for a first object according to the target signaling comprises:
obtaining, by the terminal, the TA value of the terminal for the first object according to the first signaling and the second signaling, wherein the TA value of the terminal for the first object is the same as a TA value of the terminal for a second object.

14. The method according to claim 2, wherein the target signaling comprises the first signaling, and the obtaining, by the terminal, a timing advance TA value of the terminal for a first object according to the target signaling comprises:

sending, by the terminal, a channel sounding reference signal SRS to the network-side device according to the target signaling, wherein the SRS is used for obtaining a TA value of the terminal for at least one object; and

receiving, by the terminal, second signaling, wherein the second signaling carries target information of the terminal for the at least one object, and the target information comprises a TA value, or the target information comprises a TA value and an object identifier corresponding to the TA value, or the target information comprises a TA group identifier and a TA value; wherein the TA group identifier is used for indicating a first TA group, the first TA group is associated with the at least one object, and the TA value is a TA value of the terminal for the at least one object associated with the first TA group; wherein an association relationship between the first TA group and the at least one object is explicitly or implicitly configured by a network, and the at least one object comprises the first object.

15. The method according to claim 14, wherein the SRS is determined according to the configuration information in the first signaling; or the SRS is activated by the third signaling in a case that the target signaling further comprises the third signaling.

16. The method according to claim 14, wherein beam indication information of the SRS is associated with an identifier of the at least one object, and the SRS is sent based on timing information of a second object, wherein the second object is an object currently providing a service to the terminal.

17. The method according to claim 2, wherein after the receiving, by a terminal, target signaling sent by a network-side device, the method further comprises:

determining, by the terminal, a first RACH resource for uplink synchronization of at least one object according to the first signaling and the third signaling;

sending, by the terminal, a preamble on the first RACH resource; and

receiving, by the terminal, a TA value of the terminal for the at least one object sent by the network-side device, wherein the 1st symbol of the third signaling is earlier than the 1st symbol of the second signaling, and the at least one object comprises the first object.

18. The method according to claim 17, wherein the determining, by the terminal, a first RACH resource for uplink synchronization of at least one object according to the first signaling and the third signaling comprises:

in a case that a second object is determined to be in downlink synchronization with the at least one object according to the configuration information of the plurality of objects, determining, by the terminal, the first RACH resource for uplink synchronization of the at least one object based on timing information of the second object, wherein the second object is an object currently providing a service to the terminal;

or

after a reference timing difference between the second object and the at least one object is determined according to the configuration information of the plurality of objects, determining, by the terminal, the first RACH resource for uplink synchronization of the at least one object based on the timing information of the second object and the reference timing difference.

19. The method according to claim 17, wherein in a case that the terminal sends the preamble on the first RACH resource, a behavior of the terminal satisfies one of the following:

a measurement or scheduling behavior of the terminal on a second object is not limited, wherein the second object is an object currently providing a service to the terminal;
on a time domain resource of the first RACH resource, the terminal sends no uplink signal to the second object;
on a time domain resource of a first target resource, the terminal send no uplink signal to the second object, wherein a difference between the 1st symbol of the first target resource and the 1st symbol of the first RACH resource is X1 symbols, and a difference between the last symbol of the first target resource and the last symbol of the first RACH resource is Y1 symbols, wherein both X1 and Y1 are positive integers;
in a case that an uplink signal of the second object meets a preset condition, the terminal sends no uplink signal to the second object;
the terminal refrains from monitoring a first target downlink signal, wherein the first target downlink signal is transmitted on a RACH resource for uplink synchronization of the second object, and the first target downlink signal is a downlink signal of the second object;
the terminal refrains from monitoring a second target downlink signal, wherein the second target downlink signal is transmitted on a time domain resource corresponding to the RACH resource for uplink synchronization of the second object, and the second target downlink signal is a downlink signal of the second object; and
the terminal refrains from monitoring a second target downlink signal transmitted on a time domain resource of a second target resource, wherein a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, wherein X2 and Y2 are positive integers.

20. The method according to claim 19, wherein the preset condition comprises at least one of the following:

an interval between the 1st symbol of the uplink signal of the second object and the last symbol corresponding to the first RACH resource is less than a first threshold; and
an interval between the last symbol of the uplink signal of the second object and the 1st symbol corresponding to the first RACH resource is less than a second threshold.

21. The method according to claim 17, wherein the receiving, by the terminal, a TA value of the terminal for the at least one object sent by the network-side device comprises:
monitoring, by the terminal, a Random Access Response RAR on a second object to obtain target information of the terminal for the at least one object, or monitoring, by the terminal, a RAR on the at least one object to obtain the target information of the terminal for the at least one object, wherein the target information comprises a TA value, or the target information comprises a TA value and an object identifier corresponding to the TA value, or the target information comprises a TA group identifier and a TA value, wherein the TA group identifier is used to indicate a first TA group, the first TA group is associated with the at least one object, the TA value is a TA value of the terminal for the at least one object associated with the first TA group, and an association relationship between the first TA group and the at least one object is explicitly or implicitly configured by a network.

22. The method according to claim 21, wherein in a case that the terminal monitors the RAR on the at least one object, a behavior of the terminal satisfies one of the following:

a measurement or scheduling behavior of the terminal on a second object is not limited, wherein the second object is an object currently providing a service to the terminal;
on a resource for monitoring a RAR by the terminal, the terminal refrains from monitoring a downlink signal of the second object, and/or on the resource for monitoring a RAR by the terminal, the terminal sends no uplink signal to the second object;
and
on a time domain resource of a third target resource, the terminal refrains from monitoring a downlink signal of the second object, and/or on the time domain resource of the third target resource, the terminal send no uplink signal to the second object, wherein a difference between the 1st symbol of the third target resource and the 1st symbol of the resource for monitoring the RAR by the terminal is X3 symbols, and a difference between the last symbol of the third target resource and the last symbol of the resource for monitoring the RAR by the terminal is Y3 symbols; wherein X3 and Y3 are positive integers.

23. The method according to claim 21, wherein in a case that the terminal receives a RAR carrying target information for the at least one object, the terminal starts or restarts a first timer associated with the target information.

24. The method according to claim 23, wherein the first timer is a timer associated with the first TA group, and configuration information of timers associated with different first TA groups is the same or different.

25. The method according to claim 21, wherein after the terminal receives a RAR carrying target information for the at least one object and the terminal receives at least one piece of fourth signaling, the terminal performs a first operation.

26. The method according to claim 25, wherein the fourth signaling is MAC CE signaling used for updating a TA of the second object.

27. The method according to claim 25, wherein the first operation comprises at least one of the following:

the terminal updates a TA value of a first TA group to which a third object belongs, based on a TA adjustment value carried in the fourth signaling, a downlink reception time difference between the third object and the second object, and a downlink time difference between the third object and the second object; and
the terminal restarts a timer of the first TA group to which the third object belongs.

28. The method according to claim 27, wherein the third object satisfies at least one of the following conditions:

the third object is at least one object in a third object group, wherein the third object group is an object list for which the terminal obtains or updates a TA by performing the first operation, the number of associated first TA groups for the third object group is configured or indicated by the network, and object information comprised in the third object group is configured by the network or determined by the terminal according to a first default rule; and
the third object is at least one object in a fourth object group, wherein the fourth object group is an object list for which a TA value is obtained through a RACH resource activated by the third signaling, and object information comprised in the fourth object group and the number of associated first TA groups for the fourth object group are configured or indicated by the network.

29. The method according to claim 28, wherein the terminal expects that the number of associated first TA groups for the third object group is the same as the number of associated first TA groups for the fourth object group.

30. The method according to claim 28, wherein in a case that the terminal expects that the number of associated first TA groups for the third object group is less than the number of associated first TA groups for the fourth object group, the terminal determines the third object group from the fourth object group according to the first default rule.

31. The method according to claim 28, wherein before the terminal receives the second signaling for indicating the information about the first object, in a case that a timer corresponding to a first TA group to which a fifth object belongs has expired, the terminal re-obtains a TA of the fifth object through a RACH procedure, wherein the fifth object is at least one object comprised in the fourth object group but not comprised in the third object group.

32. The method according to claim 23, wherein in a case that the terminal receives the second signaling for indicating the information about the first object, the method further comprises:

in a case that a first timer corresponding to a first TA group to which the first object belongs has expired, obtaining, by the terminal, a TA of the first object through a RACH procedure; and/or
in a case that the first timer corresponding to the first TA group to which the first object belongs has not expired, performing, by the terminal, uplink transmission based on the TA value of the first object.

33. An information sending method, comprising:
sending, by a network-side device, target signaling to a terminal, wherein the target signaling is used by the terminal to obtain a timing advance TA value for a first object, and the target signaling is signaling sent by the network-side device before the terminal accesses the first object.

34. The method according to claim 33, wherein the target signaling comprises at least one of the following:

first signaling, wherein the first signaling is used for indicating configuration information of a plurality of objects and the plurality of objects comprise the first object;

second signaling, wherein the second signaling is used for indicating information about the first object; and

third signaling, wherein the third signaling is used for obtaining a TA value of the first object.

35. The method according to claim 34, wherein the first signaling, the second signaling, and the third signaling satisfy:

the first signaling and the second signaling are different signaling, and the second signaling and the third signaling are same signaling;

or,

the first signaling, the second signaling, and the third signaling are different signaling.

36. The method according to claim 34, wherein the second signaling comprises a target field, and the target field is used for indicating the first object.

37. The method according to claim 34, wherein the second signaling comprises beam indication information, and the beam indication information is associated with the first object.

38. The method according to claim 37, wherein in a case that the second signaling and the third signaling are same signaling, a Random Access Channel RACH resource associated with a quasi co-location source Reference Signal RS corresponding to the beam indication information carried in the second signaling is used by the terminal to obtain the TA value for the first object.

39. The method according to claim 34, wherein the second signaling carries a TA value, and the TA value carried in the second signaling is used by the terminal to determine the TA value for the first object.

40. The method according to claim 34, wherein the third signaling is used for activating at least one RACH resource of at least one object, and the activated RACH resource is used for obtaining a TA value of the at least one object.

41. The method according to claim 40, wherein the third signaling comprises at least one of the following:

first indication information, wherein the first indication information is used for indicating one or more preamble indexes;

second indication information, wherein the second indication information is used for indicating one or more reference signal RS indexes;

third indication information, wherein the third indication information is used for indicating a preamble mask index;

fourth indication information, wherein the fourth indication information is used for indicating an identifier of the at least one object;

fifth indication information, wherein the fifth indication information is used for indicating a configuration information index of the at least one object; and

sixth indication information, wherein the sixth indication information is used for indicating frequency domain indication information of the at least one object; wherein

the at least one object comprises the first object.

42. The method according to claim 34, wherein the configuration information of the plurality of objects comprises at least one of the following:

configuration information of a second object, wherein the second object is an object currently providing a service to the terminal;

configuration information of at least one candidate object, wherein the at least one candidate object comprises the first object;

a reference timing difference between each candidate object and the second object;

uplink synchronization indication information of each candidate object; and

downlink synchronization indication information of each candidate object.

43. The method according to claim 42, wherein the configuration information of the at least one candidate object comprises:

all of configuration information of each candidate object configured in a unit of one candidate object;

or,

part of configuration information of each candidate object configured in a unit of one candidate object.

44. An information obtaining method, comprising:

receiving, by a terminal, target signaling sent by a network-side device; and

obtaining, by the terminal, a timing advance TA value of the terminal for a first object according to the target signaling; wherein

the target signaling comprises at least one of the following:

first signaling, wherein the first signaling is used for indicating configuration information of a plurality of objects and the plurality of objects comprise the first object; and

second signaling, wherein the second signaling is used for obtaining a TA value of the first object.

45. The method according to claim 44, wherein the second signaling comprises a target field and a TA value, the target field is used for indicating the first object, and the TA value is the TA value of the terminal for the first object.

46. The method according to claim 44, wherein the second signaling comprises a TA group identifier and a TA value, the TA group identifier is used for indicating a first TA group, the first TA group is associated with the first object, the TA value is a TA value of the terminal for an object associated with the first TA group, and an association relationship between the first TA group and the first object is explicitly or implicitly configured by a network.

47. The method according to claim 44, wherein the second signaling is used for activating at least one Random Access Channel RACH resource of the first object, and the activated RACH resource is used for obtaining a TA value of the first object.

48. The method according to claim 44, wherein a channel for carrying the second signaling is associated with the first object.

49. The method according to claim 48, wherein an association relationship between the channel carrying the second signaling and the first object comprises at least one of the following: an object identifier associated with beam indication information corresponding to the channel carrying the second signaling is the same as an identifier of the first object; an object identifier corresponding to a resource group identifier that is corresponding to the channel carrying the second signaling is the same as the identifier of the first object; and an object identifier associated with activated beam indication information that is associated with the resource group identifier corresponding to the channel carrying the second signaling is the same as the identifier of the first object.

50. The method according to claim 44, wherein the second signaling comprises at least one of the following:

first indication information, wherein the first indication information is used for indicating one or more preamble indexes; second indication information, wherein the second indication information is used for indicating one or more reference signal RS indexes; third indication information, wherein the third indication information is used for indicating a preamble mask index; and fourth indication information, wherein the fourth indication information is used for indicating an identifier of the first object.

51. The method according to claim 50, wherein an RS corresponding to the one or more RS indexes is associated with the first object.

52. The method according to claim 44, wherein the configuration information of the plurality of objects comprises at least one of the following:

configuration information of a second object, wherein the second object and the first object have different object identifiers; configuration information of at least one candidate object, wherein the at least one candidate object comprises the first object; a reference timing difference between each candidate object and the second object; uplink synchronization indication information of each candidate object; and downlink synchronization indication information of each candidate object.

53. The method according to claim 52, wherein the configuration information of the at least one candidate object comprises at least one of RS resource, RACH resource, control channel resource, and data channel resource.

54. The method according to claim 44, wherein the obtaining, by the terminal, a TA value of the terminal for a first object according to the target signaling comprises:

determining, by the terminal, a reference timing difference between the first object and a second object and a downlink reception time difference between the first object and the second object according to the first signaling and the second signaling; and obtaining, by the terminal, the TA value of the terminal for the first object based on a TA value of the second object, the reference timing difference between the first object and the second object, and the downlink reception time difference between the first object and the second object.

55. The method according to claim 44, wherein the obtaining, by the terminal, a TA value of the terminal for a first object according to the target signaling comprises:

obtaining, by the terminal, the TA value of the terminal for the first object according to the first signaling and the second signaling, wherein the TA value of the terminal for the first object is the same as a TA value of the terminal for a second object.

56. The method according to claim 44, wherein the target signaling comprises the first signaling, and the obtaining, by the terminal, a timing advance TA value of the terminal for a first object according to the target signaling comprises:

sending, by the terminal, a channel sounding reference signal SRS to the network-side device according to the target signaling, wherein the SRS is used for obtaining a TA value of the terminal for at least one object; and
receiving, by the terminal, third signaling, wherein the third signaling carries target information of the terminal for the at least one object, and the target information comprises a TA value, or the target information comprises a TA value and an object identifier corresponding to the TA value, or the target information comprises a TA group identifier and a TA value; wherein the TA group identifier is used for indicating a first TA group, the first TA group is associated with the at least one object, and the TA value is a TA value of the terminal for the at least one object associated with the first TA group; wherein the at least one object comprises the first object, and an association relationship between the first TA group and the at least one object is explicitly or implicitly configured by a network.

57. The method according to claim 56, wherein the SRS is determined according to the configuration information in the first signaling or is activated by the second signaling received by the terminal, and the 1st symbol of the second signaling is earlier than the 1st symbol of the third signaling.

58. The method according to claim 56, wherein beam indication information of the SRS is associated with an identifier of the at least one object, and the SRS is sent based on timing information of the second object.

59. The method according to claim 44, wherein after the receiving, by a terminal, target signaling sent by a network-side device, the method further comprises:

determining, by the terminal, a first RACH resource for uplink synchronization of at least one object according to the first signaling or according to the first signaling and the second signaling;
sending, by the terminal, a preamble on the first RACH resource; and
receiving, by the terminal, a TA value of the terminal for the at least one object sent by the network-side device, wherein the at least one object comprises the first object.

60. The method according to claim 59, wherein the determining, by the terminal, a first RACH resource for uplink synchronization of at least one object according to the first signaling or according to the first signaling and the second signaling comprises:

in a case that a second object is determined to be in downlink synchronization with the at least one object according to the configuration information of the plurality of objects, determining, by the terminal, the first RACH resource for uplink synchronization of the at least one object based on timing information of the second object; or,
after a reference timing difference between the second object and the at least one object is determined according to the configuration information of the plurality of objects, determining, by the terminal, the first RACH resource for uplink synchronization of the at least one object based on the timing information of the second object and the reference timing difference.

61. The method according to claim 59, wherein in a case that the terminal sends the preamble on the first RACH resource, a behavior of the terminal satisfies one of the following:

a measurement or scheduling behavior of the terminal on a second object is not limited, wherein the second object is an object currently providing a service to the terminal;
on a time domain resource of the first RACH resource, the terminal sends no uplink signal to the second object;
on a time domain resource of a first target resource, the terminal sends no uplink signal to the second object, wherein a difference between the 1st symbol of the first target resource and the 1st symbol of the first RACH resource is X1 symbols, and a difference between the last symbol of the first target resource and the last symbol of the first RACH resource is Y1 symbols, wherein both X1 and Y1 are positive integers;
in a case that an uplink signal of the second object meets a preset condition, the terminal sends no uplink signal to the second object;
the terminal refrains from monitoring a first target downlink signal, wherein the first target downlink signal is transmitted on a RACH resource for uplink synchronization of the second object, and the first target downlink signal is a downlink signal of the second object;
the terminal refrains from monitoring a second target downlink signal, wherein the second target downlink signal is transmitted on a time domain resource corresponding to the RACH resource for uplink synchronization of the second object, and the second target downlink signal is a downlink signal of the second object; and the terminal refrains from monitoring a second target downlink signal transmitted on a time domain resource of a second target resource, wherein a difference between the 1st symbol of the second target resource and the 1st symbol of the RACH resource for uplink synchronization of the second object is X2 symbols, and a difference between the last symbol of the second target resource and the last symbol of the RACH resource for uplink synchronization of the second object is Y2 symbols, wherein X2 and Y2 are positive integers.

62. The method according to claim 61, wherein the preset condition comprises at least one of the following:

an interval between the 1st symbol of the uplink signal of the second object and the last symbol corresponding to the first RACH resource is less than a first threshold; and the 1st an interval between the last symbol of the uplink signal of the second object and the 1st symbol corresponding to the first RACH resource is less than a second threshold.

63. The method according to claim 59, wherein the receiving, by the terminal, a TA value of the terminal for the at least one object sent by the network-side device comprises: monitoring, by the terminal, a Random Access Response RAR on a second object to obtain target information of the terminal for the at least one object, or monitoring, by the terminal, a RAR on the at least one object to obtain the target information of the terminal for the at least one object, wherein the target information comprises a TA value, or the target information comprises a TA value and an object identifier corresponding to the TA value, or the target information comprises a TA group identifier and a TA value, wherein the TA group identifier is used to indicate a first TA group, the first TA group is associated with the at least one object, the TA value is a TA value of the terminal for the at least one object associated with the first TA group, and an association relationship between the first TA group and the at least one object is explicitly or implicitly configured by a network.

64. The method according to claim 63, wherein in a case that the terminal monitors the RAR on the at least one object, a behavior of the terminal satisfies one of the following:

a measurement or scheduling behavior of the terminal on a second object is not limited, wherein the second object is an object currently providing a service to the terminal; on a resource for monitoring a RAR by the terminal, the terminal refrains from monitoring a downlink signal of the second object, and/or on the resource for monitoring a RAR by the terminal, the terminal sends no uplink signal to the second object; and on a time domain resource of a third target resource, the terminal refraining from monitoring a downlink signal of the second object, and/or on the time domain resource of the third target resource, the terminal sends no uplink signal to the second object, wherein a difference between the 1st symbol of the third target resource and the 1st symbol of the resource for the RAR by the terminal is X3 symbols, and a difference between the last symbol of the third target resource and the last symbol of the resource for monitoring the RAR by the terminal is Y3 symbols; wherein X3 and Y3 are positive integers.

65. An information sending method, comprising:

sending, by a network-side device, target signaling to a terminal, wherein the target signaling is used by the terminal to obtain a timing advance TA value for a first object; and the target signaling comprises at least one of the following:

first signaling, wherein the first signaling is used for indicating configuration information of a plurality of objects and the plurality of objects comprise the first object; and second signaling, wherein the second signaling is used for obtaining a TA value of the first object.

66. The method according to claim 65, wherein the second signaling comprises a target field and a TA value, the target field is used for indicating the first object, and the TA value is the TA value of the terminal for the first object.

67. The method according to claim 65, wherein the second signaling comprises a TA group identifier and a TA value, the TA group identifier is used for indicating a first TA group, the first TA group is associated with the first object, the TA value is a TA value of the terminal for an object associated with the first TA group, and an association relationship between the first TA group and the first object is explicitly or implicitly configured by a network.

**68.** The method according to claim 65, wherein the second signaling is used for activating at least one Random Access Channel RACH resource of the first object, and the activated RACH resource is used for obtaining a TA value of the first object.

**69.** The method according to claim 65, wherein a channel for carrying the second signaling is associated with the first object.

**70.** The method according to claim 69, wherein an association relationship between the channel carrying the second signaling and the first object comprises at least one of the following: an object identifier associated with beam indication information corresponding to the channel carrying the second signaling is the same as an identifier of the first object; an object identifier corresponding to a resource group identifier that is corresponding to the channel carrying the second signaling is the same as the identifier of the first object; and an object identifier associated with activated beam indication information that is associated with the resource group identifier corresponding to the channel carrying the second signaling is the same as the identifier of the first object.

**71.** The method according to claim 65, wherein the second signaling comprises at least one of the following:

first indication information, wherein the first indication information is used for indicating one or more preamble indexes;
second indication information, wherein the second indication information is used for indicating one or more reference signal RS indexes;
third indication information, wherein the third indication information is used for indicating a preamble mask index; and
fourth indication information, wherein the fourth indication information is used for indicating an identifier of the first object.

**72.** The method according to claim 71, wherein an RS corresponding to the one or more RS indexes is associated with the first object.

**73.** The method according to claim 65, wherein the configuration information of the plurality of objects comprises at least one of the following:

configuration information of a second object, wherein the second object and the first object have different object identifiers;
configuration information of at least one candidate object, wherein the at least one candidate object comprises the first object;
a reference timing difference between each candidate object and the second object;
uplink synchronization indication information of each candidate object; and
downlink synchronization indication information of each candidate object.

**74.** The method according to claim 73, wherein the configuration information of the at least one candidate object comprises at least one of RS resource, RACH resource, control channel resource, and data channel resource.

**75.** An information obtaining apparatus, comprising:

a first receiving module, configured to receive target signaling sent by a network-side device; and
an obtaining module, configured to obtain a timing advance TA value of a terminal for a first object according to the target signaling; wherein the target signaling is signaling obtained before the terminal accesses the first object.

**76.** An information sending apparatus, comprising:
a sending module, configured to send target signaling to a terminal, wherein the target signaling is used by the terminal to obtain a timing advance TA value for a first object, and the target signaling is signaling sent by a network-side device before the terminal accesses the first object.

**77.** An information obtaining apparatus, comprising:

a first receiving module, configured to receive target signaling sent by a network-side device; and
an obtaining module, configured to obtain a timing advance TA value of a terminal for a first object according to the target signaling; wherein the target signaling comprises at least one of the following:

first signaling, wherein the first signaling is used for indicating configuration information of a plurality of objects and the plurality of objects comprise the first object; and
second signaling, wherein the second signaling is used for obtaining a TA value of the first object.

**78.** An information sending apparatus, comprising:

a sending module, configured to send target signaling to a terminal, wherein the target signaling is used by the terminal to obtain a timing advance TA value for a first object; and
the target signaling comprises at least one of the following:

first signaling, wherein the first signaling is used for indicating configuration information of a plurality of objects and the plurality of objects comprise the first object; and second signaling, wherein the second signaling is used for obtaining a TA value of the first object.

79. A terminal, comprising a processor and a memory, wherein a program or instruction capable of running on the processor is stored in the memory, and when the program or instruction is executed by the processor, the steps of the information obtaining method according to any one of claims 1 to 32 are implemented, or the steps of the information obtaining method according to any one of claims 44 to 64 are implemented.

80. A network-side device, comprising a processor, a memory, and a program or instruction stored in the memory and capable of running on the processor, wherein when the program or instruction is executed by the processor, the steps of the information sending method according to any one of claims 33 to 43 are implemented, or the steps of the information sending method according to any one of claims 65 to 74 are implemented.

81. A readable storage medium, wherein the readable storage medium stores a program or instruction, and when the program or instruction is executed by a processor, the steps of the information obtaining method according to any one of claims 1 to 32 are implemented, or the steps of the information sending method according to any one of claims 33 to 43 are implemented, or the steps of the information obtaining method according to any one of claims 44 to 64 are implemented, or the steps of the information sending method according to any one of claims 65 and 74 are implemented.

12

Network-side device

11

11

Terminal

Terminal

FIG. 1

| A terminal receives target signaling sent by a network-side device | 201 |

| The terminal obtains a timing advance TA value of the terminal for a first object according to the target signaling; where the target signaling is signaling obtained before the terminal accesses the first object | 202 |

FIG. 2

300

Information obtaining apparatus

First receiving module — 301

Obtaining module — 302

FIG. 3

A network-side device sends target signaling to a terminal, where the target signaling is used by the terminal to obtain a timing advance TA value for a first object, and the target signaling is signaling sent by the network-side device before the terminal accesses the first object — 401

FIG. 4

500

Information sending apparatus

Sending module — 501

FIG. 5

A terminal receives target signaling sent by a network-side device — 601

The terminal obtains a timing advance TA value of the terminal for a first object according to the target signaling; where the target signaling includes at least one of the following: first signaling used for indicating configuration information of a plurality of objects and the plurality of objects include the first object; and second signaling used for obtaining a TA value of the first object — 602

FIG. 6

— 700

**Information obtaining apparatus**

First receiving module — 701

Obtaining module — 702

FIG. 7

A network-side device sends target signaling to a terminal, where the target signaling is used by the terminal to obtain a timing advance TA value for a first object; and the target signaling includes at least one of the following: first signaling used for indicating configuration information of a plurality of objects and the plurality of objects include the first object; and second signaling used for obtaining a TA value of the first object

— 801

FIG. 8

— 900

Information sending apparatus

Sending module — 901

FIG. 9

— 1000

Communication device

1001 — Processor ⟺ Memory — 1002

FIG. 10

1100

1101 — Radio frequency unit

Network module — 1102

1110

1109 — Memory
Application program
Operating system

Audio output unit — 1103

1104
Input unit
Graphics processing unit — 11041
Microphone — 11042

1108 — Interface unit

Processor

1107
User input unit
11071 — Touch panel
11072 — Other input devices

1106
Display unit
Display panel — 11061

Sensor — 1105

FIG. 11

1200

1201 — Radio frequency unit

Network module — 1202

1210

Memory

1209 — Application program

Operating system

1208 — Interface unit

1207 — User input unit

12071 — Touch panel

12072 — Other input devices

Processor

Audio output unit — 1203

1204

Input unit

Graphics processing unit — 12041

Microphone — 12042

1206

Display unit

Display panel — 12061

Sensor — 1205

FIG. 12

FIG. 13

| INTERNATIONAL SEARCH REPORT | International application No. |
|---|---|
| | **PCT/CN2023/088355** |

**A. CLASSIFICATION OF SUBJECT MATTER**

H04W 8/14(2009.01)i

According to International Patent Classification (IPC) or to both national classification and IPC

**B. FIELDS SEARCHED**

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD: 切换, 接入, 前, 小区, cell, 收发点, TRP, 时间提前量, TA, 信令, 多个, 候选, 信道探测参考信号, SRS, handover, access, before, time advance, signal, plurality, candidate

**C. DOCUMENTS CONSIDERED TO BE RELEVANT**

| Category* | Citation of document, with indication, where appropriate, of the relevant passages | Relevant to claim No. |
|---|---|---|
| X | WO 2021203366 A1 (GUANGDONG OPPO MOBILE TELECOMMUNICATIONS CORP., LTD.) 14 October 2021 (2021-10-14) <br> description, page 5, line 1 to page 10, line 28, page 13, line 23 to page 15, line 26, and figures 1-9 | 1-81 |
| X | WO 2021003618 A1 (GUANGDONG OPPO MOBILE TELECOMMUNICATIONS CORP., LTD.) 14 January 2021 (2021-01-14) <br> abstract, description, page 3, line 16 to page 8, line 18, page 15, line 42 to page 18, line 20, and figures 1-15 | 1-81 |
| A | WO 2022027238 A1 (GUANGDONG OPPO MOBILE TELECOMMUNICATIONS CORP., LTD.) 10 February 2022 (2022-02-10) <br> entire document | 1-81 |
| A | WO 2021139188 A1 (DATANG MOBILE COMMUNICATIONS EQUIPMENT CO., LTD.) 15 July 2021 (2021-07-15) <br> entire document | 1-81 |
| A | WO 2018201958 A1 (SHARP CORP.) 08 November 2018 (2018-11-08) <br> entire document | 1-81 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 July 2023** | **27 July 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2023/088355** |

| Patent document cited in search report | | | Publication date (day/month/year) | Patent family member(s) | | | Publication date (day/month/year) |
| --- | --- | --- | --- | --- | --- | --- | --- |
| WO | 2021203366 | A1 | 14 October 2021 | CN | 115176501 | A | 11 October 2022 |
| WO | 2021003618 | A1 | 14 January 2021 | CN | 113475116 | A | 01 October 2021 |
| WO | 2022027238 | A1 | 10 February 2022 | CN | 115669104 | A | 31 January 2023 |
| WO | 2021139188 | A1 | 15 July 2021 | CN | 113115428 | A | 13 July 2021 |
| WO | 2018201958 | A1 | 08 November 2018 | CN | 108811072 | A | 13 November 2018 |

Form PCT/ISA/210 (patent family annex) (July 2022)

**REFERENCES CITED IN THE DESCRIPTION**

**Patent documents cited in the description**

- CN 202310112752
- CN 202211387676
- CN 202210427549
- CN 202210399444